(19) Europäisches Patentamt
European Patent Office
Office européen des brevets

(11) **EP 4 428 112 A1**

(12) **EUROPEAN PATENT APPLICATION**
published in accordance with Art. 153(4) EPC

(43) Date of publication:
**11.09.2024 Bulletin 2024/37**

(51) International Patent Classification (IPC):
**C04B 35/486** (2006.01)    **C01G 25/02** (2006.01)

(21) Application number: **23780129.5**

(52) Cooperative Patent Classification (CPC):
**C01G 25/02; C04B 35/486**

(22) Date of filing: **24.03.2023**

(86) International application number:
**PCT/JP2023/011743**

(87) International publication number:
**WO 2023/190119 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 JP 2022058612**

(71) Applicant: **Daiichi Kigenso Kagaku Kogyo Co., Ltd.**
**Osaka-shi, Osaka 541-0041 (JP)**

(72) Inventors:
• **TAKEDA, Satoshi**
**Osaka-shi, Osaka 559-0025 (JP)**
• **KANENISHI, Keita**
**Osaka-shi, Osaka 559-0025 (JP)**

(74) Representative: **Cabinet Beau de Loménie**
**158, rue de l'Université**
**75340 Paris Cedex 07 (FR)**

(54) **ZIRCONIA POWDER, SINTERED ZIRCONIA OBJECT, AND METHOD FOR PRODUCING SINTERED ZIRCONIA OBJECT**

(57) Disclosed herein is a zirconia powder containing stabilized zirconia containing zirconia and a stabilizer, wherein the stabilizer contains a first stabilizer and a second stabilizer, the first stabilizer is CaO, the second stabilizer is at least one selected from the group consisting of $Y_2O_3$, $Yb_2O_3$, $Er_2O_3$, $CeO_2$, $Nd_2O_3$, $La_2O_3$, and $Tb_2O_3$, a total amount of the stabilizer in the stabilized zirconia is 2.5 mol% or more and 6.5 mol% or less in terms of oxide, and a ratio of [amount (mol%) of CaO]/[total amount (mol%) of stabilizer] is 50% or more and 98% or less.

Fig.1

EP 4 428 112 A1

**Description**

TECHNICAL FIELD

The present invention relates to a zirconia powder, a zirconia sintered body, and a method for producing a zirconia sintered body.

BACKGROUND ART

Zirconia is used for various purposes by taking advantage of its mechanical strength, translucency, refractive index, etc. In recent years, for the purpose of further enhancing the functions of electronic devices, biomaterials, and sliding parts, zirconia is required to have higher toughness as well as high strength and hydrothermal degradation resistance.

Patent Document 1 discloses a method for producing a zirconia sintered body in which a $ZrO_2$ powder with a particle diameter of 0.1 to 2.0 um containing 2 to 4 mol% of $Y_2O_3$ as a stabilizer is mixed with 2 to 10 wt% of a $ZrO_2$ fine powder with a particle diameter of 0.05 um or less containing 2 to 4 mol% of $Y_2O_3$ as a stabilizer to obtain a mixed powder, the mixed powder is then granulated, the obtained granulated powder is molded, and then the obtained molded body is preliminarily sintered to have a relative density of 96 to 98% under ordinary pressure and then subjected to hot isostatic press treatment at a temperature of 1480°C or lower (see claim 1) . Patent Document 1 is intended to obtain a zirconia sintered body having high toughness by utilizing a microcrack toughening mechanism. Specifically, attempts have been made to obtain a zirconia sintered body with high toughness by introducing relatively large cracks in the form of closed pores into the sintered body, performing hot isostatic press (HIP) treatment to make the closed pores smaller than fracture origins that the sintered body originally has, and forming defects that develop a microcrack toughening mechanism (see paragraph[0007]) .

PRIOR ART DOCUMENT

PATENT DOCUMENT

Patent Document 1: JP-A-05-070224

SUMMARY OF THE INVENTION

PROBLEMS TO BE SOLVED BY THE INVENTION

However, the production method disclosed in Patent Document 1 has a problem that controlling the particle diameters of two types of powders is complicated and difficult. In addition, HIP sintering has a problem of low versatility.

In order to solve such problems, the present applicant has applied for a patent on a zirconia powder whose stabilizer content is within a specific range and which has a specific pore distribution (Japanese Patent Application No. 2020-170949). Such a zirconia powder makes it possible to easily obtain a zirconia sintered body having high strength and high toughness .

Specifically, the present applicant has applied for a patent on the following zirconia powder as Japanese Patent Application No. 2020-170949.

A zirconia powder comprising a stabilizer, wherein

the stabilizer is CaO, $Y_2O_3$, $Er_2O_3$, or $Yb_2O_3$,

when the stabilizer is $Y_2O_3$, a content of the $Y_2O_3$ relative to an entire amount of the zirconia powder is 1.4 mol% or more and less than 2.0 mol%,

when the stabilizer is $Er_2O_3$, a content of the $Er_2O_3$ relative to an entire amount of the zirconia powder is 1.4 mol% or more and 1.8 mol% or less,

when the stabilizer is $Yb_2O_3$, a content of the $Yb_2O_3$ relative to an entire amount of the zirconia powder is 1.4 mol% or more and 1.8 mol% or less, and

when the stabilizer is CaO, a content of the CaO relative to an entire amount of the zirconia powder is 3.5 mol% or more and 4.5 mol% or less, and

in a range of 10 nm or more and 200 nm or less in a pore distribution based on a mercury intrusion method, a peak top diameter in a pore volume distribution is 20 nm or more and 120 nm or less, a pore volume is 0.2 ml/g or more and less than 0.5 ml/g, and a pore distribution width is 30 nm or more and 170 nm or less.

However, the present inventors have found that when only CaO is used as a stabilizer, there is a room for further improvement in terms of the fact that a sintering temperature range for obtaining a sintered body having high strength and high toughness is narrow. Specifically, the present inventors have found that when only CaO is used as a stabilizer and pressureless sintering is performed, a sintered body having high strength and high toughness cannot be obtained unless the sintering temperature is adjusted to fall within a range of 1225°C to 1275°C. Hereinafter, the sintering temperature range in which a sintered body having high strength and high toughness can be obtained is referred to as "sinterable temperature range". When the sinterable temperature range is 1225°C to 1275°C, the difference between the maximum sinterable temperature and the minimum sinterable temperature is 50°C.

However, when the sinterable temperature range is narrow (when the difference between the maximum sinterable temperature and the minimum sinterable temperature is about 50°C), there is a problem that temperature control during sintering is not easy. Particularly, when a zirconia powder is sintered using a large electric furnace, the temperature is different from position to position in the electric furnace, and therefore there are a high-temperature area and a low-temperature area. Therefore, when the sinterable temperature range is narrow, the zirconia powder in a high-temperature area (an area with a temperature exceeding the sinterable temperature) in the furnace and the zirconia powder in a low-temperature area (an area with a temperature lower than the sinterable temperature) in the furnace are not appropriately sintered, which makes it impossible to obtain a sintered body having high strength and high toughness.

Further, the present inventors have found that when only $Y_2O_3$ is used as a stabilizer, a sintered body having high strength and high toughness can be obtained, but there is room for improvement in terms of the fact that the sintered body is slightly inferior in hydrothermal degradation resistance to sintered bodies obtained using other stabilizers.

The present invention has been conceived in view of the above problems, and an object of the present invention is to provide a zirconia powder whose sintering temperature range for obtaining a zirconia sintered body having high strength and high toughness is wide and from which a zirconia sintered body having high hydrothermal degradation resistance can be obtained. Another object of the present invention is to provide a zirconia sintered body obtained by sintering the zirconia powder. Still another object of the present invention is to provide a method for producing the zirconia sintered body.

MEANS FOR SOLVING THE PROBLEMS

The present inventors have intensively studied to achieve the above objects. As a result, the present inventors have found that the above objects can be achieved by using CaO as a first stabilizer and at least one selected from the group consisting of $Y_2O_3$, $Yb_2O_3$, $Er_2O_3$, $CeO_2$, $Nd_2O_3$, $La_2O_3$, and $Tb_2O_3$ as a second stabilizer and by adjusting their contents to fall within specific ranges, which has led to the completion of the present invention.

Specifically, the present invention is directed to a zirconia powder containing

stabilized zirconia containing zirconia and a stabilizer, wherein
the stabilizer contains a first stabilizer and a second stabilizer,
the first stabilizer is CaO,
the second stabilizer is at least one selected from the group consisting of $Y_2O_3$, $Yb_2O_3$, $Er_2O_3$, $CeO_2$, $Nd_2O_3$, $La_2O_3$, and $Tb_2O_3$,
a total amount of the stabilizer in the stabilized zirconia is 2.5 mol% or more and 6.5 mol% or less in terms of oxide, and
a ratio of [amount (mol%) of CaO]/[total amount (mol%) of stabilizer] is 50% or more and 98% or less.

The above configuration makes it possible to widen the sinterable temperature range because the second stabilizer is contained in addition to CaO (first stabilizer) . This is clear also from Examples.

The present inventors have supposed that the reason why the sinterable temperature range is widened when the second stabilizer is contained in addition to CaO is as follows.

A zirconia sintered body has a critical crystal grain diameter below which a tetragonal phase can be maintained at room temperature. The crystal grain diameter increases as the temperature during sintering increases. Therefore, when a zirconia powder is sintered at high temperature, the crystal grain diameter exceeds the critical crystal grain diameter, and therefore martensite-type phase transition from tetragonal to monoclinic phase occurs during temperature reduction to room temperature so that cracks are produced. Such a sintered body having cracks cannot be regarded as having high strength and high toughness. For this reason, sintering needs to be performed at a temperature at which the crystal grain diameter does not exceed the critical crystal grain diameter.

Here, the critical crystal grain diameter of stabilized zirconia using only CaO as a stabilizer is regarded as about 90 nm (see W. Pyda et al., Ceramics International 13 (1987) 114-118). The critical crystal grain diameter of 90 nm is smaller than critical crystal grain diameters when other stabilizers are used. Therefore, the second stabilizer capable of increasing the critical crystal grain diameter was added in addition to CaO. This makes it possible to increase the upper limit of the sinterable temperature range as compared to stabilized zirconia using only CaO. As a result, the sinterable temperature range of the zirconia powder can be widened.

Further, when the amount of the second stabilizer added is increased, hydrothermal degradation resistance of the resulting zirconia sintered body is reduced. However, the above configuration makes it possible to achieve high strength and high toughness and maintain high hydrothermal degradation resistance because the ratio of [amount (mol%) of CaO] /[total amount (mol%) of stabilizer] is set to 50% or more to minimize the amount of the second stabilizer added.

Further, since the total amount of the stabilizer is 2.5 mol% or more in terms of oxide, the monoclinic fraction of the resulting zirconia sintered body can be reduced, which makes it possible to prevent cracks from being produced in a zirconia sintered body obtained by sintering the zirconia powder.

Further, since the total amount of the stabilizer is 6.5 mol% or less in terms of oxide, the fraction of a cubic phase having low mechanical characteristics (strength, toughness) can be reduced and the fraction of a tetragonal phase having high mechanical characteristics can be increased.

As described above, the above configuration makes it possible to widen a sintering temperature range (sinterable temperature range) for obtaining a sintered body having high strength and high toughness and to provide a zirconia powder from which a sintered body having high hydrothermal degradation resistance can be obtained.

In the above configuration, the second stabilizer is preferably at least one selected from the group consisting of $Y_2O_3$, $Yb_2O_3$, $Er_2O_3$, $Nd_2O_3$, $La_2O_3$, and $Tb_2O_3$, and
a total amount of the stabilizer in the stabilized zirconia is preferably 2.5 mol% or more and 4.5 mol% or less in terms of oxide.

In the above configuration, the second stabilizer is preferably $CeO_2$ and
a total amount of the stabilizer in the stabilized zirconia is preferably 4.0 mol% or more and 6.5 mol% or less in terms of oxide.

In the above configuration, $Al_2O_3$ is preferably contained in an amount of 3 mass% or less relative to an entire amount of the zirconia powder.

When contained in an amount of 3 mass% or less, $Al_2O_3$ functions as a sintering aid, and therefore a relative sintered density can be increased even when sintering is performed at low temperature. Therefore, a sintered body having high strength and high toughness can be obtained even when sintering is performed at low temperature. As described above, when $Al_2O_3$ is contained in an amount of 3 mass% or less, the lower limit of the sinterable temperature range can be reduced so that the sinterable temperature range can further be widened.

In the above configuration, when a minimum sintering temperature at which the following <Characteristic 1>, <Characteristic 2>, <Characteristic 3>, and <Characteristic 4> are satisfied when molding is performed at a molding pressure of 2 $t/cm^2$ and sintering is performed at atmospheric pressure is defined as a temperature A, and

a maximum sintering temperature at which the following <Characteristic 1>, <Characteristic 2>, <Characteristic 3>, and <Characteristic 4> are satisfied when molding is performed at a molding pressure of 2 $t/cm^2$ and sintering is performed at atmospheric pressure is defined as a temperature B,
a difference between an average crystal grain diameter A when sintering is performed at the temperature A and an average crystal grain diameter B when sintering is performed at the temperature B [(average crystal grain diameter B) - (average crystal grain diameter A)] is preferably 50 nm or more.

<Characteristic 1>

A relative sintered density is 98.0% or more.

<Characteristic 2>

A toughness value as measured by IF method is 10 MPa·m$^{0.5}$ or more.

<Characteristic 3>

A three-point bending strength is 700 MPa or more.

<Characteristic 4>

A monoclinic fraction after hydrothermal treatment at 134°C and 0.3 MPa for 15 hours is 30% or less.

The fact that the difference [(average crystal grain diameter B) - (average crystal grain diameter A)] is 50 nm or more means that the difference between the maximum sinterable temperature (temperature B) and the minimum sinterable temperature (temperature A) is large (the difference is at least 50°C). Therefore, when the difference [(average crystal grain diameter B) - (average crystal grain diameter A)] is 50 nm or more, the sinterable temperature range can be regarded as being particularly wide.

In the above configuration, the zirconia powder preferably has a specific surface area of 10 $m^2/g$ or more and 40 $m^2/g$ or less.

When the specific surface area is 10 $m^2/g$ or more, the zirconia powder has excellent sinterability. Therefore, a relative sintered density can be increased even when sintering is performed at low temperature so that a sintered body having high strength and high toughness can be obtained. As described above, when the specific surface area is 10 $m^2/g$ or more, the lower limit of the sinterable temperature range can be reduced so that the sinterable temperature range can further be widened.

In the above configuration, the zirconia powder preferably has a particle diameter $D_{50}$ of 0.10 um or more and 0.80 um or less.

When the particle diameter $D_{50}$ is 0.80 um or less, the zirconia powder has excellent sinterability. Therefore, a relative sintered density can be increased even when sintering is performed at low temperature so that a sintered body having high strength and high toughness can be obtained. As described above, when the particle diameter $D_{50}$ is 0.80 um or less, the lower limit of the sinterable temperature range can be reduced so that the sinterable temperature range can further be widened.

The present invention is also directed to a zirconia sintered body containing

stabilized zirconia containing zirconia and a stabilizer, wherein
the stabilizer contains a first stabilizer and a second stabilizer,
the first stabilizer is CaO,
the second stabilizer is at least one selected from the group consisting of $Y_2O_3$, $Yb_2O_3$, $Er_2O_3$, $CeO_2$, $Nd_2O_3$, $La_2O_3$, and $Tb_2O_3$,
a total amount of the stabilizer in the stabilized zirconia is 2.5 mol% or more and 6.5 mol% or less in terms of oxide, and
a ratio of [amount (mol%) of CaO]/[total amount (mol%) of stabilizer] is 50% or more and 98% or less.

According to the above configuration, since the second stabilizer is contained in addition to CaO (first stabilizer), the total amount of the stabilizer is 2.5 mol% or more and 6.5 mol% or less in terms of oxide, and the ratio of [amount (mol%) of CaO]/[total amount (mol%) of stabilizer] is 50% or more, the zirconia sintered body can be regarded as having been obtained by sintering the zirconia powder having a wide sinterable temperature range.

Further, the zirconia sintered body obtained by sintering the zirconia powder in the sinterable temperature range can have high strength, high toughness, and high hydrothermal degradation resistance.

In the above configuration, the second stabilizer is preferably at least one selected from the group consisting of $Y_2O_3$, $Yb_2O_3$, $Er_2O_3$, $Nd_2O_3$, $La_2O_3$, and $Tb_2O_3$, and
a total amount of the stabilizer in the stabilized zirconia is preferably 2.5 mol% or more and 4.5 mol% or less in terms of oxide.

In the above configuration, the second stabilizer is preferably $CeO_2$ and
a total amount of the stabilizer in the stabilized zirconia is preferably 4.0 mol% or more and 6.5 mol% or less in terms of oxide.

In the above configuration, $Al_2O_3$ is preferably contained in an amount of 3 mass% or less relative to an entire amount of the zirconia sintered body.

When contained in an amount of 3 mass% or less, $Al_2O_3$ functions as a sintering aid when the zirconia sintered body is obtained by sintering the zirconia powder. Therefore, the zirconia sintered body can be regarded as having been obtained by sintering the zirconia powder having a wider sinterable temperature range.

In the above configuration, a monoclinic fraction after hydrothermal treatment at 134°C and 0.3 MPa for 15 hours is preferably 30% or less.

When the monoclinic fraction after hydrothermal treatment at 134°C and 0.3 MPa for 15 hours is 30% or less, the zirconia sintered body can be regarded as having more excellent hydrothermal degradation resistance.

In the above configuration, a monoclinic fraction before hydrothermal treatment is preferably 7.0% or less, and a value obtained by subtracting a monoclinic fraction before hydrothermal degradation from a monoclinic fraction after hydrothermal treatment at 134°C and 0.3 MPa for 15 hours is preferably 20% or less.

When the monoclinic fraction before hydrothermal treatment is 7. 0% or less and the value obtained by subtracting a monoclinic fraction before hydrothermal degradation from a monoclinic fraction after hydrothermal treatment at 134°C and 0.3 MPa for 15 hours is 20% or less, the monoclinic fraction after hydrothermal treatment can be regarded as being low because the monoclinic fraction before hydrothermal treatment is low and the amount of monoclinic fraction change before and after hydrothermal treatment is small. Therefore, the zirconia sintered body can be regarded as having more excellent hydrothermal degradation resistance.

In the above configuration, the zirconia sintered body preferably has a three-point bending strength of 700 MPa or more and 1500 MPa or less.

When the three-point bending strength is 700 MPa or more, the zirconia sintered body can be regarded as having higher strength.

In the above configuration, the zirconia sintered body preferably has a toughness value of 10 MPa $\cdot$m$^{0.5}$ or more and 40 MPa $\cdot$m$^{0.5}$ or less as measured by IF method.

When the toughness value is 10 MPa$\cdot$m$^{0.5}$ or more, the zirconia sintered body can be regarded as having higher toughness.

In the above configuration, a monoclinic fraction after hydrothermal treatment at 400°C and 30 MPa for 5 hours is preferably 30% or less.

When the monoclinic fraction after hydrothermal treatment at 400°C and 30 MPa for 5 hours is 30% or less, the zirconia sintered body can be regarded as having more excellent hydrothermal degradation resistance.

In the above configuration, a monoclinic fraction before hydrothermal treatment is preferably 7.0% or less, and a value obtained by subtracting a monoclinic fraction before hydrothermal degradation from a monoclinic fraction after hydrothermal treatment at 400°C and 30 MPa for 5 hours is preferably 20% or less.

When the monoclinic fraction before hydrothermal treatment is 7.0% or less and the value obtained by subtracting a monoclinic fraction before hydrothermal degradation from a monoclinic fraction after hydrothermal treatment at 400°C and 30 MPa for 5 hours is 20% or less, the monoclinic fraction after hydrothermal treatment can be regarded as being low because the monoclinic fraction before hydrothermal treatment is low and the amount of monoclinic fraction change before and after hydrothermal treatment is small. Therefore, the zirconia sintered body can be regarded as having more excellent hydrothermal degradation resistance.

The present invention is also directed to a method for producing a zirconia sintered body, including:

step X in which the zirconia powder is molded to obtain a molded body; and
step Y in which, after step X, the molded body is sintered under conditions of 1200°C or higher and 1450°C or lower and 1 hour or more and 5 hours or less.

The zirconia powder contains the second stabilizer in addition to CaO (first stabilizer), the total amount of the stabilizer is 2.5 mol% or more and 6.5 mol% or less in terms of oxide, and the ratio of [amount (mol%) of CaO]/[total amount (mol%) of stabilizer] is 50% or more.

The method for producing a zirconia sintered body according to the above configuration makes it possible to obtain a zirconia sintered body having high strength, high toughness, and high hydrothermal degradation resistance by sintering the zirconia powder in a wide temperature range of 1200°C or higher and 1450°C or lower for 1 hour or more and 5 hours or less.

EFFECTS OF THE INVENTION

According to the present invention, it is possible to provide a zirconia powder whose sintering temperature range for obtaining a zirconia sintered body having high strength and high toughness is wide and from which a zirconia sintered body having high hydrothermal degradation resistance can be obtained. Further, it is possible to provide a zirconia sintered body obtained by sintering the zirconia powder. Further, it is possible to provide a method for producing the zirconia sintered body.

BRIEF DESCRIPTION OF THE DRAWINGS

Fig. 1 is a schematic diagram for illustrating a method for producing a zirconia powder according to an embodiment of the present invention.
Fig. 2 is a schematic diagram for illustrating indentation lengths and crack lengths.

MODE FOR CARRYING OUT THE INVENTION

Hereinafter, embodiments of the present invention will be described. However, the present invention is not limited only to these embodiments. Zirconia (zirconium oxide) herein is common zirconia and contains 10 mass% or less of metal compounds including hafnia as impurities. The terms "comprise" and "contain" herein include the concepts of "comprise", "contain", "substantially consist of", and "consist of".

The maximum value and minimum value of content of each component shown below should each independently be considered as a preferable minimum value and a preferable maximum value of the present invention regardless of the contents of other components.

Further, the maximum values and the minimum values of various parameters (measured values and the like) shown below should each independently be considered as preferable minimum values and maximum values of the present invention regardless of the content (composition) of each component.

[Zirconia powder]

Hereinbelow, an example of a zirconia powder according to an embodiment of the present invention will be described. However, the zirconia powder of the present invention is not limited to the following example.

The zirconia powder according to the present embodiment contains

stabilized zirconia containing zirconia and a stabilizer, wherein
the stabilizer contains a first stabilizer and a second stabilizer,
the first stabilizer is CaO,
the second stabilizer is at least one selected from the group consisting of $Y_2O_3$, $Yb_2O_3$, $Er_2O_3$, $CeO_2$, $Nd_2O_3$, $La_2O_3$, and $Tb_2O_3$,
a total amount of the stabilizer in the stabilized zirconia is 2.5 mol% or more and 6.5 mol% or less in terms of oxide, and
a ratio of [amount (mol%) of CaO]/[total amount (mol%) of stabilizer] is 50% or more and 98% or less.

The zirconia powder contains primary particles that are not aggregated and secondary particles in which primary particles are aggregated.

It should be noted that, in the zirconia powder, the amount of primary particles that do not form secondary particles and are present in the state of unaggregated primary particles is very small and is, for example, less than 1 mass% of the entire primary particles (i.e., the total of unaggregated primary particles and primary particles aggregated and forming secondary particles). That is, the zirconia powder may contain a very small amount of unaggregated primary particles, but most of the zirconia powder is composed of secondary particles.

The zirconia powder according to the present embodiment contains stabilized zirconia.

The content of the stabilized zirconia is preferably 70 mass% or more, more preferably 75 mass% or more, even more preferably 80 mass% or more, particularly preferably 85 mass% or more when the entire amount of the zirconia powder is taken as 100 mass%. The content of the stabilized zirconia may be 99 mass% or less, 95 mass% or less, or the like when the entire amount of the zirconia powder is taken as 100 mass%. The zirconia powder may be composed of only the stabilized zirconia. In this case, the content of the stabilized zirconia is 100 mass% when the entire amount of the zirconia powder is taken as 100 mass%.

The content of the stabilized zirconia is preferably 70 mass% or more and 99 mass% or less, more preferably 75 mass% or more and 95 mass% or less when the entire amount of the zirconia powder is taken as 100 mass%.

The stabilized zirconia contains zirconia and a stabilizer. The stabilizer is contained in the primary particles in the form of solid solution or the like.

The total content of zirconia and the stabilizer in the stabilized zirconia is preferably 70 mass% or more, more preferably 80 mass% or more when the entire amount of the stabilized zirconia is taken as 100 mass%. The total content of zirconia and the stabilizer may be 99 mass% or less, 95 mass% or less, or the like when the entire amount of the stabilized zirconia is taken as 100 mass%.

The total content of zirconia and the stabilizer in the stabilized zirconia is preferably 70 mass% or more and 99 mass% or less, more preferably 75 mass% or more and 95 mass% or less when the entire amount of the stabilized zirconia is taken as 100 mass%.

The stabilized zirconia may be composed of only zirconia and a stabilizer.

The stabilizer contains a first stabilizer and a second stabilizer.

The first stabilizer is CaO. The zirconia powder contains CaO as the first stabilizer and therefore has excellent hydrothermal degradation resistance.

The second stabilizer is at least one selected from the group consisting of $Y_2O_3$, $Yb_2O_3$, $Er_2O_3$, $CeO_2$, $Nd_2O_3$, $La_2O_3$, and $Tb_2O_3$. $Y_2O_3$, $Yb_2O_3$, $Er_2O_3$, $CeO_2$, $Nd_2O_3$, $La_2O_3$, and $Tb_2O_3$ are stabilizers that can increase the critical crystal grain diameter when added to stabilized zirconia using only CaO as a stabilizer. Since the zirconia powder contains the second stabilizer in addition to CaO (first stabilizer), the sinterable temperature range can be widened.

The second stabilizer may be selected from the viewpoint of how much critical crystal grain diameter the zirconia powder needs to have. Among them, the second stabilizer is preferably $Y_2O_3$, $Yb_2O_3$, or $La_2O_3$ from the viewpoint that a white sintered body can be obtained. From the viewpoint that a pink sintered body can be obtained, the second stabilizer is preferably $Er_2O_3$. From the viewpoint that a yellow sintered body can be obtained, the second stabilizer is preferably $CeO_2$. From the viewpoint that a purple sintered body can be obtained, the second stabilizer is preferably $Nd_2O_3$. From the viewpoint that an orange sintered body can be obtained, the second stabilizer is preferably $Tb_2O_3$.

The zirconia powder has a ratio of [amount (mol%) of CaO] / [total amount (mol%) of stabilizer] of 50% or more and 98% or less. When the amount of the second stabilizer added is increased, hydrothermal degradation resistance of the resulting zirconia sintered body is reduced. However, it is possible to achieve high strength and high toughness and maintain high hydrothermal degradation resistance because the ratio of [amount (mol%) of CaO]/[total amount (mol%) of stabilizer] is set to 50% or more to minimize the amount of the second stabilizer added.

The ratio of [amount (mol%) of CaO]/[total amount (mol%) of stabilizer] is more preferably 55% or more, even more preferably 60% or more.

The ratio of [amount (mol%) of CaO]/[total amount (mol%) of stabilizer] is more preferably 90% or less, even more preferably 80% or less.

The ratio of [amount (mol%) of CaO]/[total amount (mol%) of stabilizer] is more preferably 55% or more and 90% or less, even more preferably 60% or more and 80% or less.

The total amount of the stabilizer in the stabilized zirconia is 2.5 mol% or more and 6.5 mol% or less in terms of oxide. Since the total amount of the stabilizer is 2.5 mol% or more in terms of oxide, the monoclinic fraction of the resulting zirconia sintered body can be reduced, which makes it possible to prevent cracks from being produced in a zirconia sintered body obtained by sintering the zirconia powder. Further, since the total amount of the stabilizer is 6.5 mol% or less in terms of oxide, the fraction of a cubic phase having low mechanical characteristics (strength, toughness) can be reduced and the fraction of a tetragonal phase having high mechanical characteristics can be increased.

The total amount of the stabilizer is preferably 2.7 mol% or more, more preferably 2.9 mol% or more, even more preferably 3.0 mol% or more in terms of oxide.

The total amount of the stabilizer is preferably 6.0 mol% or less, more preferably 5.5 mol% or less, even more preferably 5.0 mol% or less, particularly preferably 4.5 mol% or less in terms of oxide.

The total amount of the stabilizer is preferably 2.7 mol% or more and 6.0 mol% or less, more preferably 2.9 mol% or more and 5.5 mol% or less, even more preferably 3.0 mol% or more and 5.0 mol% or less, particularly preferably 3.0 mol% or more and 4.5 mol% or less in terms of oxide.

When the second stabilizer of the zirconia powder is at least one selected from the group consisting of $Y_2O_3$, $Yb_2O_3$, $Er_2O_3$, $Nd_2O_3$, $La_2O_3$, and $Tb_2O_3$, the total amount of the stabilizer in the stabilized zirconia is preferably 2.5 mol% or more and 4.5 mol% or less in terms of oxide.

When the second stabilizer is at least one selected from the group consisting of $Y_2O_3$, $Yb_2O_3$, $Er_2O_3$, $Nd_2O_3$, $La_2O_3$, and $Tb_2O_3$, the total amount of the stabilizer in the stabilized zirconia is more preferably 2.6 mol% or more, even more preferably 2.8 mol% or more in terms of oxide.

When the second stabilizer is at least one selected from the group consisting of $Y_2O_3$, $Yb_2O_3$, $Er_2O_3$, $Nd_2O_3$, $La_2O_3$, and $Tb_2O_3$, the total amount of the stabilizer in the stabilized zirconia is more preferably 4.1 mol% or less, even more preferably 3.7 mol% or less in terms of oxide.

When the second stabilizer is at least one selected from the group consisting of $Y_2O_3$, $Yb_2O_3$, $Er_2O_3$, $Nd_2O_3$, $La_2O_3$, and $Tb_2O_3$, the total amount of the stabilizer in the stabilized zirconia is more preferably 2.6 mol% or more and 4.1 mol% or less, even more preferably 2.8 mol% or more and 3.7 mol% or less in terms of oxide.

It should be noted that $Y_2O_3$, $Yb_2O_3$, $Er_2O_3$, $Nd_2O_3$, $La_2O_3$, and $Tb_2O_3$ are all trivalent elements and therefore exhibit the same behavior. That is, $Y_2O_3$, $Yb_2O_3$, $Er_2O_3$, $Nd_2O_3$, $La_2O_3$, and $Tb_2O_3$ exhibit the same behavior when the amounts thereof added to the zirconia powder are the same.

When the second stabilizer of the zirconia powder is $CeO_2$, the total amount of the stabilizer in the stabilized zirconia is preferably 4.0 mol% or more and 6.5 mol% or less in terms of oxide.

When the second stabilizer is $CeO_2$, the total amount of the stabilizer in the stabilized zirconia is more preferably 4.3 mol% or more, even more preferably 4.5 mol% or more in terms of oxide.

When the second stabilizer is $CeO_2$, the total amount of the stabilizer in the stabilized zirconia is more preferably 6.3 mol% or less, even more preferably 6.0 mol% or less in terms of oxide.

When the second stabilizer is $CeO_2$, the total amount of the stabilizer in the stabilized zirconia is more preferably 4.3 mol% or more and 6.3 mol% or less, even more preferably 4.5 mol% or more and 6.0 mol% or less in terms of oxide.

The content of zirconia in the stabilized zirconia is preferably 80 mass% or more and 99 mass% or less. The content of zirconia in the stabilized zirconia is more preferably 85 mass% or more, even more preferably 90 mass% or more. The content of zirconia in the stabilized zirconia is more preferably 98 mass% or less, even more preferably 97 mass% or less.

The content of zirconia in the stabilized zirconia is more preferably 85 mass% or more and 98 mass% or less, even more preferably 90 mass% or more and 97 mass% or less.

When a minimum sintering temperature at which the following <Characteristic 1>, <Characteristic 2>, <Characteristic 3>, and <Characteristic 4> are satisfied when the zirconia powder is molded at a molding pressure of 2 t/cm$^2$ and sintered at atmospheric pressure is defined as a temperature A, and

a maximum sintering temperature at which the following <Characteristic 1>, <Characteristic 2>, <Characteristic 3>, and <Characteristic 4> are satisfied when the zirconia powder is molded at a molding pressure of 2 t/cm$^2$ and

sintered at atmospheric pressure is defined as a temperature B,
a difference between an average crystal grain diameter A when sintering is performed at the temperature A and an average crystal grain diameter B when sintering is performed at the temperature B [(average crystal grain diameter B) - (average crystal grain diameter A)] is preferably 50 nm or more.

<Characteristic 1>

A relative sintered density is 98.0% or more.

<Characteristic 2>

A toughness value as measured by IF method is 10 MPa·m$^{0.5}$ or more.

<Characteristic 3>

A three-point bending strength is 700 MPa or more.

<Characteristic 4>

A monoclinic fraction after hydrothermal treatment at 134°C and 0.3 MPa for 15 hours is 30% or less.
The fact that the difference [(average crystal grain diameter B) - (average crystal grain diameter A)] is 50 nm or more means that the difference between the maximum sinterable temperature (temperature B) and the minimum sinterable temperature (temperature A) is large. Therefore, when the difference [(average crystal grain diameter B) - (average crystal grain diameter A)] is 50 nm or more, the sinterable temperature range can be regarded as being particularly wide.
The difference [(average crystal grain diameter B) - (average crystal grain diameter A)] is more preferably 55 nm or more, even more preferably 60 nm or more.
The difference [(average crystal grain diameter B) - (average crystal grain diameter A)] is preferably as large as possible and may be, for example, 120 nm or less or 100 nm or less.
The difference [(average crystal grain diameter B) - (average crystal grain diameter A)] is more preferably 55 nm or more and 120 nm or less, even more preferably 60 nm or more and 100 nm or less.
The toughness value as measured by IF method, the three-point bending strength, and the monoclinic fraction after hydrothermal treatment at 134°C and 0.3 MPa for 15 hours refer to values obtained by the methods described in Examples.
It should be noted that the pressure at which hydrothermal treatment is performed is herein expressed as absolute pressure. That is, Characteristic 4 means that "A monoclinic fraction after hydrothermal treatment at 134°C and an absolute pressure of 0.3 MPa for 15 hours is 30% or less".

<Specific surface area>

The zirconia powder preferably has a specific surface area of 10 m$^2$/g or more and 40 m$^2$/g or less. When the specific surface area is 10 m$^2$/g or more, the zirconia powder has excellent sinterability. Therefore, a relative sintered density can be increased even when sintering is performed at low temperature so that a sintered body having high strength and high toughness can be obtained. As described above, when the specific surface area is 10 m$^2$/g or more, the lower limit of the sinterable temperature range can be reduced so that the sinterable temperature range can further be widened.
The specific surface area is more preferably 15 m$^2$/g or more, even more preferably 20 m$^2$/g or more. The specific surface area is preferably 37 m$^2$/g or less, more preferably 35 m$^2$/g or less, even more preferably 30 m$^2$/g or less.
The specific surface area is more preferably 15 m$^2$/g or more and 37 m$^2$/g or less, even more preferably 20 m$^2$/g or more and 35 m$^2$/g or less, particularly preferably 20 m$^2$/g or more and 30 m$^2$/g or less.
The specific surface area refers to a value obtained by the method described in Examples.

<Particle diameter D$_{50}$>

The zirconia powder preferably has a particle diameter D$_{50}$ of 0.10 um or more and 0.80 um or less. When the particle diameter D$_{50}$ is 0.80 um or less, the zirconia powder has more excellent sinterability. Therefore, a relative sintered density can be increased even when sintering is performed at low temperature so that a sintered body having high strength and high toughness can be obtained. As described above, when the particle diameter D$_{50}$ is 0.80 um or less, the lower limit of the sinterable temperature range can be reduced so that the sinterable temperature range can further be widened.

The particle diameter $D_{50}$ is more preferably 0.15 um or more, even more preferably 0.20 um or more. The particle diameter $D_{50}$ is more preferably 0.70 um or less, even more preferably 0.60 um or less.

The particle diameter $D_{50}$ is more preferably 0.15 um or more and 0.70 um or less, even more preferably 0.20 um or more and 0.60 um or less.

The particle diameter $D_{50}$ refers to a value obtained by the method described in Examples.

It should be noted that when the particle diameter $D_{50}$ is measured, not only secondary particles but also unaggregated primary particles may be contained, but the amount of unaggregated primary particles that may be contained in the zirconia powder is very small. Therefore, the particle diameter $D_{50}$ may be regarded as representing the particle diameter $D_{50}$ of the secondary particles, that is, the average particle diameter of the secondary particles.

<Crystallite diameter>

The crystallite diameter of the zirconia powder is preferably 10 nm or more and 60 nm or less. When the crystallite diameter is 60 nm or less, the zirconia powder has more excellent sinterability. Therefore, a relative sintered density can be increased even when sintering is performed at low temperature so that a sintered body having high strength and high toughness can be obtained. As described above, when the crystallite diameter is 60 nm or less, the lower limit of the sinterable temperature range can be reduced so that the sinterable temperature range can further be widened.

<Pore distribution>

1. Peak top diameter of interparticle spaces between primary particles

The zirconia powder preferably has a peak top diameter of 20 nm or more and 120 nm or less in a pore volume distribution in a range of 10 nm or more and 200 nm or less in a pore distribution based on a mercury intrusion method. The peak top diameter is preferably 30 nm or more, more preferably 35 nm or more, even more preferably 40 nm or more, particularly preferably 45 nm or more. The peak top diameter is preferably 110 nm or less, more preferably 100 nm or less, even more preferably 90 nm or less, particularly preferably 80 nm or less .

The peak top diameter is preferably 30 nm or more and 110 nm or less, more preferably 35 nm or more and 100 nm or less, even more preferably 40 nm or more and 90 nm or less, particularly preferably 45 nm or more and 80 nm or less.

It should be noted that when there are two or more peaks in a range of 10 nm or more and 200 nm or less in the pore distribution, the phrase "has a peak top diameter of 20 nm or more and 120 nm or less in a pore volume distribution" as used herein means that all the peak top diameters in a range of 10 nm or more and 200 nm or less in the pore distribution are within a range of 20 nm or more and 120 nm or less.

2. Pore distribution width of interparticle spaces between primary particles

The zirconia powder preferably has a pore distribution width of 30 nm or more and 170 nm or less in a range of 10 nm or more and 200 nm or less in a pore distribution based on a mercury intrusion method. The pore distribution width is preferably 40 nm or more, more preferably 46 nm or more, even more preferably 50 nm or more, particularly preferably 60 nm or more. The pore distribution width is preferably 120 nm or less, more preferably 110 nm or less, even more preferably 100 nm or less, particularly preferably 95 nm or less, more particularly preferably 90 nm or less.

The pore distribution width is preferably 40 nm or more and 120 nm or less, more preferably 46 nm or more and 110 nm or less, even more preferably 50 nm or more and 100 nm or less, particularly preferably 60 nm or more and 95 nm or less, more particularly preferably 60 nm or more and 90 nm or less.

Here, the pore distribution width refers to a width of a peak at which the log differential pore volume is 0.1 mL/g or more.

It should be noted that when there are two or more peaks in a range of 10 nm or more and 200 nm or less in the pore distribution, the phrase "has a pore distribution width of 30 nm or more and 170 nm or less" as used herein means that when, in a graph showing a pore distribution with pore diameter as abscissa and log differential pore volume as ordinate, a point intersecting with a log differential pore volume of 0.1 mL/g for the first time as viewed from a side where the pore diameter is smaller (a point intersecting while ascending) is defined as a minimum diameter and a point intersecting with a log differential pore volume of 0.1 mL/g again (a point intersecting while descending) is defined as a maximum diameter, the difference between the maximum diameter and the minimum diameter is 30 nm or more and 170 nm or less.

3. Pore volume of interparticle spaces between primary particles

The zirconia powder preferably has a pore volume of 0.2 mL/g or more and less than 0.5 mL/g in a range of 10 nm or more and 200 nm or less in a pore distribution based on a mercury intrusion method. The pore volume is preferably 0.22 mL/g or more, more preferably 0.25 mL/g or more, even more preferably 0.3 mL/g or more, particularly preferably 0.33 mL/g or more, more particularly preferably 0.35 mL/g or more. The pore volume is preferably 0.48 mL/g or less, more preferably 0.46 mL/g or less, even more preferably 0.44 mL/g or less.

The pore volume is preferably 0.22 mL/g or more and 0.48 mL/g or less, more preferably 0.25 mL/g or more and 0.46 mL/g or less, even more preferably 0.30 mL/g or more and 0.44 mL/g or less, particularly preferably 0.33 mL/g or more and 0.44 mL/g or less, more particularly preferably 0.35 mL/g or more and 0.44 mL/g or less.

When the peak top diameter, the pore volume, and the pore distribution width are controlled to fall within their respective numerical ranges described above, sintering can be performed at a lower temperature. The peak top diameter, the pore distribution width, and the pore volume refer to values obtained by the methods described in Examples.

The zirconia powder may contain an additive. The additive herein refers to one to be added to and mixed with zirconia particles. Examples of the additive include a sintering aid and a colorant. The additives include one that functions only as a sintering aid, one that functions only as a colorant, and one that functions as a sintering aid and also functions as a colorant. Hereinbelow, the sintering aid and the colorant will be described.

The zirconia powder preferably contains $Al_2O_3$ (alumina) in an amount of 3 mass% or less relative to the entire amount of the zirconia powder. When contained in an amount of 3 mass% or less, alumina functions as a sintering aid, and therefore a relative sintered density can be increased even when sintering is performed at low temperature. Therefore, a sintered body having high strength and high toughness can be obtained even when sintering is performed at low temperature. As described above, when alumina is contained in an amount of 3 mass% or less, the lower limit of the sinterable temperature range can be reduced so that the sinterable temperature range can further be widened. Further, when the zirconia powder contains alumina, a reduction in the toughness of a zirconia sintered body is likely to be prevented. Further, the translucency of the zirconia sintered body can be improved by adjusting the content of alumina.

When the zirconia powder contains $Al_2O_3$, the content of the $Al_2O_3$ is more preferably 2.0 mass% or less, even more preferably 1.0 mass% or less from the viewpoint of allowing the $Al_2O_3$ to appropriately function as a sintering aid.

When the zirconia powder contains $Al_2O_3$, the content of the $Al_2O_3$ is more preferably 0.05 mass% or more, even more preferably 0.10 mass% or more from the viewpoint of allowing the $Al_2O_3$ to appropriately function as a sintering aid.

When the zirconia powder contains $Al_2O_3$, the content of the $Al_2O_3$ is more preferably 0.05 mass% or more and 2.0 mass% or less, even more preferably 0.10 mass% or more and 1.0 mass% or less.

The form of alumina is not limited, but an alumina powder is preferred from the viewpoint of handleability during preparation of the zirconia powder (during mixing and dispersing alumina with and in the zirconia powder) and the viewpoint of reducing residual impurities.

When the form of alumina is a powder, the average particle diameter of primary particles of alumina is not limited and is, for example, 0.02 to 0.4 um, preferably 0.05 to 0.3 um, more preferably 0.07 to 0.2 $\mu$m.

It should be noted that the zirconia powder does not always need to contain $Al_2O_3$ (alumina) because the zirconia powder has a wide sinterable temperature range and the resulting sintered body has high hydrothermal degradation resistance.

In addition to or instead of alumina, the zirconia powder may contain sinterable ceramics, a thermosetting resin, or the like for the purpose of improving characteristics such as strength.

The zirconia powder may contain at least one selected from the group consisting of Fe, V, Mn, Co, Zn, Cu, and Ti. When the zirconia powder contains at least one selected from the group consisting of Fe, V, Mn, Co, Zn, Cu, and Ti as a coloring element, a zirconia sintered body obtained by sintering the zirconia powder can appropriately be colored.

The form of the coloring element is not limited, and the coloring element can be added in the form of an oxide, a chloride, or the like. Specific examples of a colorant containing such a coloring element include $Fe_2O_3$, $V_2O_5$, $MnO_2$, CoO, ZnO, CuO, and $TiO_2$. The colorant is preferably added to and mixed with the zirconia powder.

When $Fe_2O_3$ is contained as the colorant, the content of the colorant is preferably 0.005 mass% or more and 1 mass% or less, more preferably 0.05 mass% or more and 0.5 mass% or less when the entire amount of the zirconia powder is taken as 100 mass%. When the content of the colorant is 0.005 mass% or more, intended coloring is easily achieved. That is, the color tone can easily be adjusted.

When $V_2O_5$ is contained as the colorant, the content thereof is preferably 0.005 mass% or more and 0.5 mass% or less, more preferably 0.01 mass% or more and 0.1 mass% or less when the entire amount of the zirconia powder is taken as 100 mass%. When the content of the colorant is 0.005 mass% or more, intended coloring is easily achieved. That is, the color tone can easily be adjusted.

When $MnO_2$ is contained as the colorant, the content thereof is preferably 0.005 mass% or more and 2 mass% or less, more preferably 0.1 mass% or more and 1.1 mass% or less when the entire amount of the zirconia powder is taken as 100 mass%. When the content of the colorant is 0.005 mass% or more, intended coloring is easily achieved. That is, the color tone can easily be adjusted.

When CoO is contained as the colorant, the content of the colorant is preferably 0.005 mass% or more and 2 mass% or less, more preferably 0.01 mass% or more and 1.5 mass% or less when the entire amount of the zirconia powder is taken as 100 mass%. When the content of the colorant is 0.005 mass% or more, intended coloring is easily achieved. That is, the color tone can easily be adjusted.

When ZnO is contained as the colorant, the content of the colorant is preferably 0.005 mass% or more and 1 mass% or less, more preferably 0.1 mass% or more and 0.5 mass% or less when the entire amount of the zirconia powder is taken as 100 mass%. When the content of the colorant is 0.005 mass% or more, intended coloring is easily achieved. That is, the color tone can easily be adjusted.

When CuO is contained as the colorant, the content of the colorant is preferably 0.005 mass% or more and 1 mass% or less, more preferably 0.05 mass% or more and 0.6 mass% or less when the entire amount of the zirconia powder is taken as 100 mass%. When the content of the colorant is 0.005 mass% or more, intended coloring is easily achieved. That is, the color tone can easily be adjusted.

When $TiO_2$ is contained as the colorant, the content of the colorant is preferably 0.005 mass% or more and 2 mass% or less, more preferably 0.01 mass% or more and 1 mass% or less, even more preferably 0.1 mass% or more and 0.3 mass% or less when the entire amount of the zirconia powder is taken as 100 mass%. When the content of the colorant is 0.005 mass% or more, intended coloring is easily achieved. That is, the color tone can easily be adjusted.

<Relative molding density>

The zirconia powder preferably has a relative molding density of 43 to 51% when molded at a molding pressure of 2 t/cm². Here, the relative molding density is a value calculated by the following formula.

Relative molding density (%) = (molding density/theoretical sintered density) × 100          (4)

Here, the theoretical sintered density (denoted by $\rho_0$) is a value calculated by the formula (2-1) described later as a method for measuring the relative sintered density of a zirconia sintered body. The lower limit of the relative molding density is preferably 44.5% or more, more preferably 45% or more. The upper limit of the relative molding density is preferably 50.5% or less, more preferably 49.5% or less, even more preferably 48.5% or less, particularly preferably 48% or less.

The relative molding density is preferably 44.5% or more and 50.5% or less, more preferably 45% or more and 49.5% or less, even more preferably 45% or more and 48.5% or less, particularly preferably 45% or more and 48% or less.

The zirconia powder according to the present embodiment has been described above.

[Method for producing zirconia powder]

Hereinafter, an example of a method for producing a zirconia powder will be described. However, the method for producing a zirconia powder is not limited to the following example.

A method for producing a zirconia powder according to an embodiment of the present invention includes:

step 1 in which a zirconium salt solution and a sulfating agent solution are separately heated to 95°C or higher and 100°C or lower;
step 2 in which the heated zirconium salt solution and the heated sulfating agent solution are brought into contact with each other in such a manner that a concentration of a mixed liquid does not change from start to end of the contact, thereby obtaining a basic zirconium sulfate-containing reaction liquid as a mixed liquid;
step 3 in which the basic zirconium sulfate-containing reaction liquid obtained in step 2 is aged at 95°C or higher for 3 hours or more;
step 4 in which a stabilizer is added to the aged basic zirconium sulfate-containing reaction liquid obtained in step 3;
step 5 in which a zirconium-containing hydroxide is obtained by adding an alkali to the basic zirconium sulfate-containing reaction liquid obtained in step 4; and
step 6 in which the zirconium-containing hydroxide obtained in step 5 is subjected to thermal treatment to obtain a zirconia powder, wherein
in step 2, from start to end of the contact, a weight ratio $SO_4^{2-}/ZrO_2$ in the mixed liquid is maintained in a range of 0.3 to 0.8, and a temperature of the mixed liquid is maintained at 95°C or higher.

Hereinbelow each of the steps will be described in detail.

<Step 1>

In step 1, a zirconium salt solution and a sulfating agent solution as starting materials are separately heated to 95°C or higher and 100°C or lower.

A zirconium salt to be used for preparing the zirconium salt solution may be anyone that supplies zirconium ions, and, for example, zirconium oxynitrate, zirconium oxychloride, zirconium nitrate, and the like can be used. These may be used singly or in combination of two or more of them. Among these, zirconium oxychloride is preferred in terms of its high productivity on an industrial scale.

A solvent to be used for preparing the zirconium salt solution may be selected according to the type of zirconium salt used etc. Usually, water (pure water or ion-exchanged water, the same applies hereinafter) is preferred.

The concentration of the zirconium salt solution is not limited, and in general, the amount of the zirconium salt contained per 1000 g of the solvent is preferably 5 to 250 g, more preferably 20 to 150 g in terms of zirconium oxide ($ZrO_2$).

A sulfating agent may be anyone that reacts with zirconium ions to produce a sulfate (i.e., a sulfating reagent), and examples thereof include sodium sulfate, potassium sulfate, ammonium sulfate, potassium hydrogen sulfate, sodium hydrogen sulfate, potassium disulfate, sodium disulfate, and sulfur trioxide. The sulfating agent may be in any form such as a powder or a solution, but a solution (especially, an aqueous solution) is preferred. As a solvent, the same solvent as used for preparing the zirconium salt solution can be used.

The acid concentration of the zirconium salt solution is preferably set to 0.1 to 2.0 N. By setting the acid concentration to fall within the above range, the aggregation state of particles constituting the zirconia powder can be controlled to be appropriate. The acid concentration can be adjusted by using, for example, hydrochloric acid, nitric acid, sodium hydroxide, or the like.

The concentration of the sulfating agent (the sulfating agent solution) is not limited, and in general, the amount of the sulfating agent is preferably 5 to 250 g, particularly preferably 20 to 150 g per 1000 g of the solvent.

Containers for preparing the zirconium salt solution and the sulfating agent solution are not limited in their materials as long as the containers each have a capacity large enough for sufficiently stirring the zirconium salt solution or the sulfating agent solution. However, the containers preferably have equipment capable of appropriately performing heating so that the temperature of each of the solutions does not fall below 95°C.

The heating temperature of the zirconium salt solution and the sulfating agent solution is not limited as long as it is 95°C or higher and 100°C or lower, and is preferably 97°C or higher. If step 2 is performed while the temperature of the zirconium salt solution and the sulfating agent solution is kept lower than 95°C, the zirconium salt solution and the sulfating agent do not sufficiently react with each other, resulting in a lowered yield.

<Step 2>

In step 2, the heated zirconium salt solution and the heated sulfating agent solution are brought into contact with each other in such a manner that a concentration of a mixed liquid does not change from start to end of the contact, thereby obtaining a basic zirconium sulfate-containing reaction liquid as a mixed liquid. Here, from start to end of the contact, a weight ratio $SO_4^{2-}/ZrO_2$ in the mixed liquid is maintained in a range of 0.3 to 0.8, and a temperature of the mixed liquid is maintained at 95°C or higher.

Hereinafter, step 2 will be described with reference to the drawings.

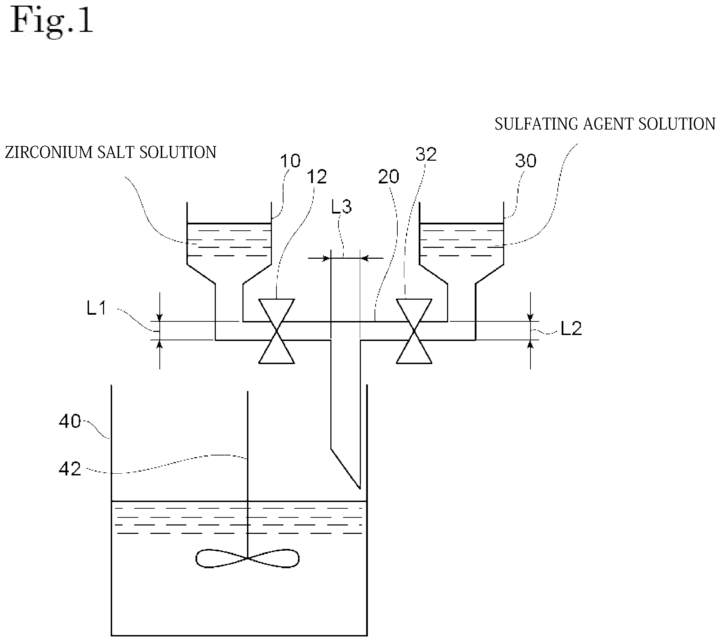

Fig. 1 is a schematic diagram for illustrating the method for producing a zirconia powder according to the present embodiment. As shown in Fig. 1, a container 10 is connected to one upper end (on the left side in Fig. 1) of a T-shaped tube 20 via a valve 12. A container 30 is connected to the other upper end (on the right side in Fig. 1) of the T-shaped tube 20 via a valve 32. In the container 10, a zirconium solution heated to 95°C or higher and 100°C or lower is stored. In the container 30, a sulfating agent solution heated to 95°C or higher and 100°C or lower is stored.

In step 2, the valve 12 is opened while the valve 32 is opened, thereby bringing the zirconium solution into contact with the sulfating agent solution. A mixed liquid (basic zirconium sulfate-containing reaction liquid) obtained by the contact immediately flows into an aging container 40 from the lower side of the T-shaped tube 20. In step 2, by such a method, the concentration of the reaction liquid (the concentration of the reaction liquid in the T-shaped tube 20) is prevented from changing from start to end of the contact of the zirconium solution with the sulfating agent solution. In step 2, since the concentration change of $SO_4^{2-}/ZrO_2$ from start to end of the contact is prevented, a uniform reactant is obtained. By adopting such a step (step 2), the peak top diameter, the pore volume, and the pore distribution width of primary particles can be controlled. That is, the size of pores derived from interparticle spaces between primary particles in secondary particles can be reduced, the distribution of the pores can be sharpened, and the volume of the pores derived from interparticle spaces between primary particles can also be reduced.

The weight ratio $SO_4^{2-}/ZrO_2$ in the mixed liquid in step 2 is preferably within a range of 0.3 to 0.8, more preferably 0.4 to 0.7, even more preferably 0.45 to 0.65. When the weight ratio $SO_4^{2-}/ZrO_2$ in the mixed liquid is adjusted to 0.3 or more, the yield of basic zirconium sulfate as a reaction product can be increased. Further, when the weight ratio $SO_4^{2-}$

/$ZrO_2$ in the mixed liquid is adjusted to 0.8 or less, production of a soluble salt of zirconium sulfate can be prevented, thereby preventing a reduction in the yield of basic zirconium sulfate.

In step 2, in order to maintain the temperature of the mixed liquid at 95°C or higher, it is preferable to install a heater in a tube (e.g., the T-shaped tube 20) or the like for supplying each of the solutions.

Hereinbelow, an example of step 2 will specifically be described.

When 213 g of a 25 mass% aqueous sodium sulfate solution and 450 g of an aqueous zirconium oxychloride solution with a concentration of 16 mass% in terms of $ZrO_2$ are brought into contact with each other using, as the T-shaped tube 20, a T-shaped tube having a tube diameter L1 of 10 mm at one upper end (on the left side in Fig. 1), a tube diameter L2 of 10 mm at the other upper end (on the right side in Fig. 1), and a tube diameter L3 of 15 mm at a lower end, the time (contact time) from the start of contact to the end of contact (until the aqueous zirconium chloride solution in the container 10 and the sulfating agent solution in the container 30 disappear) is preferably 30 seconds to 300 seconds, more preferably 60 seconds to 200 seconds, even more preferably 90 seconds to 150 seconds.

<Step 3>

In step 3, the basic zirconium sulfate-containing reaction liquid obtained in step 2 is aged at 95°C or higher for 3 hours or more. In step 3, for example, the basic zirconium sulfate-containing reaction liquid flowing into the aging container 40 is aged at 95°C or higher for 3 hours or more while being stirred with a stirrer 42. The upper limit of the aging time is not limited, and is, for example, 7 hours or less. The temperature (aging temperature) of the mixed liquid (the basic zirconium sulfate-containing reaction liquid) in step 3 is preferably 95°C or higher, more preferably 97°C or higher and 100°C or lower. By setting the aging temperature to 95°C or higher and the aging time to 3 hours or more, basic zirconium sulfate can sufficiently be produced, thereby increasing the yield.

The mixed liquid contains basic zirconium sulfate as a main component and is a basic zirconium sulfate slurry.

<Step 4>

In step 4, a stabilizer is added to the aged basic zirconium sulfate-containing reaction liquid obtained in step 3. The order of addition of the stabilizer is not limited. The first stabilizer may first be added, followed by addition of the second stabilizer, or the second stabilizer may first be added, followed by addition of the first stabilizer, or the first stabilizer and the second stabilizer may be added at the same time.

<Step 5>

In step 5, an alkali is added to the basic zirconium sulfate-containing reaction liquid obtained in step 4 to perform a neutralization reaction. Neutralization produces a zirconium-containing hydroxide.

The alkali is not limited, and examples thereof include sodium hydroxide, sodium carbonate, ammonia, hydrazine, and ammonium hydrogen carbonate. The alkali is not limited in concentration, and one diluted with water and having a concentration of 5 to 30% is usually used.

As a method for adding the alkali, there are two methods: (1) adding an alkali solution to the basic zirconium sulfate-containing reaction liquid and (2) adding the basic zirconium sulfate-containing reaction liquid to an alkali solution, but the method is not limited and either of the methods may be used.

After the neutralization, the slurry is filtered to obtain a zirconium-containing hydroxide. If necessary, the zirconium-containing hydroxide is preferably washed with water such as pure water to remove impurities. If necessary, drying or the like may be performed after washing with water.

<Step 6>

In step 6, the zirconium-containing hydroxide obtained in step 5 is subjected to thermal treatment (firing) to oxidize the zirconium-containing hydroxide, thereby obtaining a zirconia powder.

The thermal treatment temperature (firing temperature) and the thermal treatment time (firing time) of the zirconium-containing hydroxide are not limited, but the thermal treatment is usually performed at about 600 to 1200°C for 1 hour to 10 hours. The firing temperature is more preferably 650°C or higher and 1100°C or lower, even more preferably 700°C or higher and 1000°C or lower. The firing temperature is more preferably 2 hours to 6 hours, even more preferably 2 hours to 4 hours. By setting the thermal treatment temperature to 600°C or higher and 1200°C or lower, the specific surface area of the resulting zirconia powder can be adjusted to fall within an appropriate range. By setting the thermal treatment temperature to 600°C or higher and 1200°C or lower, the pore distribution of the resulting zirconia powder can be adjusted to fall within an appropriate range. The thermal treatment atmosphere is not limited and may usually be air or an oxidizing atmosphere.

<Step 7>

After step 6, if necessary, the obtained zirconia powder may be pulverized to form a slurry. In this case, a binder may be added in order to improve moldability. When a slurry is not formed (when the zirconia powder is not pulverized), the binder and the zirconia powder may uniformly be mixed with a kneading machine.

The binder is preferably an organic binder. The organic binder is likely to be removed from a molded body in a heating furnace filled with an oxidizing atmosphere so that a degreased body can be obtained, and therefore impurities are less likely to finally remain in a sintered body.

Examples of the organic binder include those that are soluble in alcohol or those that are soluble in mixed liquids of two or more selected from the group consisting of alcohols, water, aliphatic ketones, and aromatic hydrocarbons. The organic binder may be, for example, at least one selected from the group consisting of polyethylene glycol, glycol fatty acid ester, glycerin fatty acid ester, polyvinyl butyral, polyvinyl methyl ether, polyvinyl ethyl ether, and vinyl propionate. The organic binder may further contain at least one thermoplastic resin insoluble in alcohol or the mixed liquids.

After the addition of the organic binder, a target zirconia powder can be obtained by performing treatment such as drying or pulverization by a publicly-known method.

The particle diameter $D_{50}$ of the zirconia powder can be controlled by the pulverization in step 7.

When a sintering aid, a colorant, or the like is added, a zirconia powder containing the sintering aid, the colorant, or the like can be obtained by adding it and mixing the resultant after step 6. As a more detailed method of the mixing, it is preferable to disperse the mixture in pure water or the like to form a slurry, followed by wet-mixing.

When step 7 is performed, a sintering aid, a colorant, or the like may be added in step 7.

The zirconia powder according to the present embodiment has been described above.

[Method for producing zirconia sintered body]

Hereinbelow, an example of a method for producing a zirconia sintered body will be described. However, the method for producing a zirconia sintered body of the present invention is not limited to the following example.

A method for producing a zirconia sintered body according to an embodiment of the present invention includes:

step X in which the zirconia powder is molded to obtain a molded body; and

step Y in which, after step X, the molded body is sintered under conditions of 1200°C or higher and 1450°C or lower and 1 hour or more and 5 hours or less.

In the method for producing a zirconia sintered body according to the present embodiment, first, a zirconia powder is prepared. As the zirconia powder, one described in the section of [Zirconia powder] can be used.

Next, the zirconia powder is molded to obtain a molded body (step X). For the molding, a commercially available molding machine and cold isostatic pressing (CIP) can be employed. Alternatively, the zirconia powder may temporarily be molded by a molding machine once and then finally be molded by press molding. The press molding may usually be performed at a pressure in a range of 0.1 t to 3 t/cm². The pressure is preferably 0.5 t to 2.5 t/cm², more preferably 0.8 t to 2.2 t/cm², even more preferably 1 t to 2 t/cm².

Then, the molded body is sintered under conditions of 1200°C or higher and 1450°C or lower and 1 hour or more and 5 hours or less (step Y). In the present embodiment, since the zirconia powder contains the second stabilizer in addition to CaO (first stabilizer), the total amount of the stabilizer is 2.5 mol% or more and 6.5 mol% or less in terms of oxide, and the ratio of [amount (mol%) of CaO]/[total amount (mol%) of stabilizer] is 50% or more, the sintering temperature range (sinterable temperature range) for obtaining a sintered body having high strength and high toughness can be widened. Therefore, sintering may be performed in a range of 1200°C or higher and 1450°C or lower.

The sintering temperature range is preferably as wide as possible and may be, for example, more preferably 1200°C or higher and 1300°C or lower. The holding time during sintering is not limited, either, and is, for example, more preferably 1 to 3 hours. The sintering atmosphere may be air or an oxidizing atmosphere. The sintering may be performed under ordinary pressure, and it is not necessary to apply pressure. However, pressure may be applied.

The method for producing a zirconia sintered body according to the present embodiment makes it possible to obtain a zirconia sintered body having high strength, high toughness, and high hydrothermal degradation resistance by sintering the zirconia powder in a wide temperature range of 1200°C or higher and 1450°C or lower for 1 hour or more and 5 hours or less.

The method for producing a stabilized zirconia sintered body according to the present embodiment has been described above.

[Zirconia sintered body]

Hereinbelow, an example of a zirconia sintered body according to an embodiment of the present invention will be described. However, the zirconia sintered body of the present invention is not limited to the following example.

The zirconia sintered body according to the present embodiment contains

stabilized zirconia containing zirconia and a stabilizer, wherein
the stabilizer contains a first stabilizer and a second stabilizer,
the first stabilizer is CaO,
the second stabilizer is at least one selected from the group consisting of $Y_2O_3$, $Yb_2O_3$, $Er_2O_3$, $CeO_2$, $Nd_2O_3$, and $Tb_2O_3$,
a total amount of the stabilizer in the stabilized zirconia is 2.5 mol% or more and 6.5 mol% or less in terms of oxide, and
a ratio of [amount (mol%) of CaO]/[total amount (mol%) of stabilizer] is 50% or more and 98% or less.

As described above, the zirconia sintered body according to the present embodiment contains stabilized zirconia.

The content of the stabilized zirconia is preferably 70 mass% or more, more preferably 75 mass% or more, even more preferably 80 mass% or more, particularly preferably 85 mass% or more when the entire amount of the zirconia sintered body is taken as 100 mass%. The content of the stabilized zirconia may be 99 mass% or less, 95 mass% or less, or the like when the entire amount of the zirconia sintered body is taken as 100 mass%. The zirconia sintered body may be composed of only the stabilized zirconia. That is, the zirconia sintered body may be formed by sintering only the stabilized zirconia. In this case, the content of the stabilized zirconia is 100 mass% when the entire amount of the zirconia sintered body is taken as 100 mass%.

The content of the stabilized zirconia is preferably 70 mass% or more and 99 mass% or less, more preferably 75 mass% or more and 95 mass% or less, even more preferably 80 mass% or more and 95 mass% or less, particularly preferably 85 mass% or more and 95 mass% or less when the entire amount of the zirconia sintered body is taken as 100 mass%.

The zirconia sintered body contains zirconia and a stabilizer.

The total content of zirconia and the stabilizer in the stabilized zirconia is preferably 70 mass% or more, more preferably 80 mass% or more when the entire amount of the stabilized zirconia is taken as 100 mass%. The total content of zirconia and the stabilizer may be 99 mass% or less, 95 mass% or less, or the like when the entire amount of the stabilized zirconia is taken as 100 mass%.

The total content of zirconia and the stabilizer in the stabilized zirconia is preferably 70 mass% or more and 99 mass% or less, more preferably 80 mass% or more and 95 mass% or less when the entire amount of the stabilized zirconia is taken as 100 mass%.

The stabilized zirconia may be composed of only zirconia and a stabilizer.

The stabilizer contains a first stabilizer and a second stabilizer.

The first stabilizer is CaO. The zirconia powder contains CaO as the first stabilizer and therefore has excellent hydrothermal degradation resistance.

The second stabilizer is at least one selected from the group consisting of $Y_2O_3$, $Yb_2O_3$, $Er_2O_3$, $CeO_2$, $Nd_2O_3$, $La_2O_3$, and $Tb_2O_3$. Since the zirconia sintered body contains the second stabilizer in addition to CaO (first stabilizer), the sinterable temperature range is widened.

The second stabilizer may be selected from the viewpoint of how much critical crystal grain diameter the zirconia sintered body needs to have. Among them, the second stabilizer is preferably $Y_2O_3$, $Yb_2O_3$, or $La_2O_3$ from the viewpoint that a white sintered body can be obtained. From the viewpoint that a pink sintered body can be obtained, the second stabilizer is preferably $Er_2O_3$. From the viewpoint that a yellow sintered body can be obtained, the second stabilizer is preferably $CeO_2$. From the viewpoint that a purple sintered body can be obtained, the second stabilizer is preferably $Nd_2O_3$. From the viewpoint that an orange sintered body can be obtained, the second stabilizer is preferably $Tb_2O_3$.

The zirconia sintered body has a ratio of [amount (mol%) of CaO]/[total amount (mol%) of stabilizer] of 50% or more and 98% or less. When the amount of the second stabilizer added is increased, hydrothermal degradation resistance is reduced. However, it is possible to achieve high strength and high toughness and maintain high hydrothermal degradation resistance because the ratio of [amount (mol%) of CaO] /[total amount (mol%) of stabilizer] is set to 50% or more to minimize the amount of the second stabilizer added.

The ratio of [amount (mol%) of CaO]/[total amount (mol%) of stabilizer] is more preferably 55% or more, even more preferably 60% or more.

The ratio of [amount (mol%) of CaO]/[total amount (mol%) of stabilizer] is more preferably 90% or less, even more preferably 80% or less.

The ratio of [amount (mol%) of CaO]/[total amount (mol%) of stabilizer] is more preferably 55% or more and 90% or less, even more preferably 60% or more and 80% or less.

The total amount of the stabilizer in the stabilized zirconia is 2.5 mol% or more and 6.5 mol% or less in terms of oxide. Since the total amount of the stabilizer is 2.5 mol% or more in terms of oxide, the monoclinic fraction can be reduced, which makes it possible to prevent cracks from being produced. Further, since the total amount of the stabilizer is 6.5 mol% or less in terms of oxide, the fraction of a cubic phase having low mechanical characteristics (strength, toughness) can be reduced and the fraction of a tetragonal phase having high mechanical characteristics can be increased.

The total amount of the stabilizer is preferably 2.7 mol% or more, more preferably 2.9 mol% or more, even more preferably 3.0 mol% or more in terms of oxide.

The total amount of the stabilizer is preferably 6.0 mol% or less, more preferably 5.5 mol% or less, even more preferably 5.0 mol% or less, particularly preferably 4.5 mol% or less in terms of oxide.

The total amount of the stabilizer is preferably 2.7 mol% or more and 6.0 mol% or less, more preferably 2.9 mol% or more and 5.5 mol% or less, even more preferably 3.0 mol% or more and 5.0 mol% or less, particularly preferably 3.0 mol% or more and 4.5 mol% or less in terms of oxide.

When the second stabilizer of the zirconia sintered body is at least one selected from the group consisting of $Y_2O_3$, $Yb_2O_3$, $Er_2O_3$, $Nd_2O_3$, $La_2O_3$, and $Tb_2O_3$, the total amount of the stabilizer in the stabilized zirconia is preferably 2.5 mol% or more and 4.5 mol% or less in terms of oxide.

When the second stabilizer is at least one selected from the group consisting of $Y_2O_3$, $Yb_2O_3$, $Er_2O_3$, $Nd_2O_3$, $La_2O_3$, and $Tb_2O_3$, the total amount of the stabilizer in the stabilized zirconia is more preferably 2.6 mol% or more, even more preferably 2.8 mol% or more in terms of oxide.

When the second stabilizer is at least one selected from the group consisting of $Y_2O_3$, $Yb_2O_3$, $Er_2O_3$, $Nd_2O_3$, $La_2O_3$, and $Tb_2O_3$, the total amount of the stabilizer in the stabilized zirconia is more preferably 4.1 mol% or less, even more preferably 3.7 mol% or less in terms of oxide.

When the second stabilizer is at least one selected from the group consisting of $Y_2O_3$, $Yb_2O_3$, $Er_2O_3$, $Nd_2O_3$, $La_2O_3$, and $Tb_2O_3$, the total amount of the stabilizer in the stabilized zirconia is more preferably 2.6 mol% or more and 4.1 mol% or less, even more preferably 2.8 mol% or more and 3.7 mol% or less in terms of oxide.

It should be noted that $Y_2O_3$, $Yb_2O_3$, $Er_2O_3$, $Nd_2O_3$, $La_2O_3$, and $Tb_2O_3$ are all trivalent elements and therefore exhibit the same behavior. That is, $Y_2O_3$, $Yb_2O_3$, $Er_2O_3$, $Nd_2O_3$, $La_2O_3$, and $Tb_2O_3$ exhibit the same behavior when the amounts thereof added to the zirconia sintered body are the same.

When the second stabilizer of the zirconia sintered body is $CeO_2$, the total amount of the stabilizer in the stabilized zirconia is preferably 4.0 mol% or more and 6.5 mol% or less in terms of oxide.

When the second stabilizer is $CeO_2$, the total amount of the stabilizer in the stabilized zirconia is more preferably 4.3 mol% or more, even more preferably 4.5 mol% or more in terms of oxide.

When the second stabilizer is $CeO_2$, the total amount of the stabilizer in the stabilized zirconia is more preferably 6.3 mol% or less, even more preferably 6.0 mol% or less in terms of oxide.

When the second stabilizer is $CeO_2$, the total amount of the stabilizer in the stabilized zirconia is more preferably 4.3 mol% or more and 6.3 mol% or less, even more preferably 4.5 mol% or more and 6.0 mol% or less in terms of oxide.

The content of zirconia in the stabilized zirconia is preferably 80 mass% or more and 99 mass% or less. The content of zirconia in the stabilized zirconia is more preferably 85 mass% or more, even more preferably 90 mass% or more. The content of zirconia in the stabilized zirconia is more preferably 98 mass% or less, even more preferably 97 mass% or less.

The content of zirconia in the stabilized zirconia is more preferably 85 mass% or more and 98 mass% or less, even more preferably 90 mass% or more and 97 mass% or less.

The fraction of the monoclinic phase (monoclinic fraction before hydrothermal treatment) contained in the crystal phase of the zirconia sintered body is preferably 0.2% or more and 7.0% or less. The monoclinic fraction is more preferably 0.3% or more, even more preferably 0.5% or more. The monoclinic fraction is more preferably 5.0% or less, even more preferably 4.0% or less.

The fraction of the monoclinic phase (monoclinic fraction before hydrothermal treatment) contained in the crystal phase of the zirconia sintered body is more preferably 0.3% or more and 5.0% or less, even more preferably 0.5% or more and 4.0% or less.

When the monoclinic fraction is 0.2% or more and 7.0% or less, the zirconia sintered body can have higher strength and higher toughness. The monoclinic fraction can be controlled by, for example, the content of the first stabilizer, the content of the second stabilizer, the content ratio, and the sintering temperature.

The monoclinic fraction is determined by the method described in Examples.

The fraction of the cubic phase (cubic fraction before hydrothermal treatment) contained in the crystal phase of the zirconia sintered body is preferably 3.0% or less. When the cubic fraction is 3.0% or less, the fraction of the cubic phase having low mechanical characteristics (strength, toughness) can be regarded as being low.

It should be noted that the zirconia sintered body contains substantially no crystal phase other than monoclinic crystal, cubic crystal, and tetragonal crystal.

<Hydrothermal degradation resistance 1>

The zirconia sintered body preferably has a monoclinic fraction of 30% or less after hydrothermal treatment at 134 °C and 0.3 MPa (absolute pressure 0.3 MPa) for 15 hours. When the monoclinic fraction after hydrothermal treatment is 30% or less, the zirconia sintered body can be regarded as having more excellent hydrothermal degradation resistance. The monoclinic fraction after hydrothermal treatment can be controlled by, for example, the content of the first stabilizer, the content of the second stabilizer, the content ratio, and the sintering temperature.

The monoclinic fraction after hydrothermal treatment is more preferably 20% or less, even more preferably 10% or less. The monoclinic fraction after hydrothermal treatment is preferably as low as possible and is, for example, 0.5% or more or 1% or more.

The monoclinic fraction after hydrothermal treatment is more preferably 0.5% or more and 20% or less, even more preferably 1% or more and 10% or less.

<Hydrothermal degradation resistance 2>

The zirconia sintered body preferably has a monoclinic fraction before hydrothermal treatment of 7.0% or less and a value obtained by subtracting a monoclinic fraction before hydrothermal degradation from a monoclinic fraction after hydrothermal treatment at 134°C and 0.3 MPa (absolute pressure 0.3 MPa) for 15 hours of 20% or less.

When the monoclinic fraction before hydrothermal treatment is 7.0% or less and the value obtained by subtracting a monoclinic fraction before hydrothermal degradation from a monoclinic fraction after hydrothermal treatment at 134°C and 0.3 MPa for 15 hours is 20% or less, the monoclinic fraction after hydrothermal treatment can be regarded as being low because the monoclinic fraction before hydrothermal treatment is low and the amount of monoclinic fraction change before and after hydrothermal treatment is small. Therefore, the zirconia sintered body can be regarded as having more excellent hydrothermal degradation resistance.

The value obtained by subtracting a monoclinic fraction before hydrothermal degradation from a monoclinic fraction after hydrothermal treatment at 134°C and 0.3 MPa for 15 hours is more preferably 15% or less, even more preferably 10% or less.

<Hydrothermal degradation resistance 3>

The zirconia sintered body preferably has a monoclinic fraction of 30% or less after hydrothermal treatment at 300°C and 8 MPa (absolute pressure 8 MPa) for 5 hours. When the monoclinic fraction after hydrothermal treatment is 30% or less, the zirconia sintered body can be regarded as having more excellent hydrothermal degradation resistance. The monoclinic fraction after hydrothermal treatment can be controlled by, for example, the content of the first stabilizer, the content of the second stabilizer, the content ratio, and the sintering temperature.

The monoclinic fraction after hydrothermal treatment is more preferably 20% or less, even more preferably 15% or less. The monoclinic fraction after hydrothermal treatment is preferably as low as possible and is, for example, 0.5% or more or 1.0% or more.

The monoclinic fraction after hydrothermal treatment is more preferably 0.5% or more and 20% or less, even more preferably 1.0% or more and 10% or less.

<Hydrothermal degradation resistance 4>

The zirconia sintered body preferably has a monoclinic fraction of 30% or less after hydrothermal treatment at 400°C and 30 MPa (absolute pressure 30 MPa) for 5 hours. When the monoclinic fraction after hydrothermal treatment is 30% or less, the zirconia sintered body can be regarded as having even more excellent hydrothermal degradation resistance. The monoclinic fraction after hydrothermal treatment can be controlled by, for example, the content of the first stabilizer, the content of the second stabilizer, the content ratio, and the sintering temperature.

The monoclinic fraction after hydrothermal treatment is more preferably 25% or less, even more preferably 20% or less. The monoclinic fraction after hydrothermal treatment is preferably as low as possible and is, for example, 0.5% or more or 1.0% or more.

The monoclinic fraction after hydrothermal treatment is more preferably 0.5% or more and 25% or less, even more preferably 1.0% or more and 20% or less.

<Hydrothermal degradation resistance 5>

The zirconia sintered body preferably has a monoclinic fraction before hydrothermal treatment of 7.0% or less and a value obtained by subtracting a monoclinic fraction before hydrothermal degradation from a monoclinic fraction after hydrothermal treatment at 400°C and 30 MPa (absolute pressure 30 MPa) for 5 hours of 20% or less.

When the monoclinic fraction before hydrothermal treatment is 7. 0% or less and the value obtained by subtracting a monoclinic fraction before hydrothermal degradation from a monoclinic fraction after hydrothermal treatment at 400°C and 30 MPa (absolute pressure 30 MPa) for 5 hours is 20% or less, the monoclinic fraction after hydrothermal treatment can be regarded as being low because the monoclinic fraction before hydrothermal treatment is low and the amount of monoclinic fraction change before and after hydrothermal treatment is small. Therefore, the zirconia sintered body can be regarded as having more excellent hydrothermal degradation resistance.

The value obtained by subtracting a monoclinic fraction before hydrothermal degradation from a monoclinic fraction after hydrothermal treatment at 400°C and 30 MPa (absolute pressure 30 MPa) for 5 hours is more preferably 15% or less, even more preferably 10% or less.

<Mechanical strength>

The zirconia sintered body preferably has a three-point bending strength of 700 MPa or more and 1500 MPa or less.

The three-point bending strength is more preferably 800 MPa or more, even more preferably 900 MPa or more. The three-point bending strength is preferably as high as possible and may be, for example, 1400 MPa or less or 1300 MPa or less.

The three-point bending strength is more preferably 800 MPa or more and 1400 MPa or less, even more preferably 900 MPa or more and 1300 MPa or less.

When the three-point bending strength is 700 MPa or more, the zirconia sintered body can be regarded as having higher strength. The three-point bending strength is determined by the method described in Examples.

<Toughness>

The zirconia sintered body preferably has a toughness value of 10 MPa $\cdot m^{0.5}$ or more and 40 MPa $\cdot m^{0.5}$ or less as measured by IF method.

The toughness value is more preferably 13 MPa $\cdot m^{0.5}$ or more, even more preferably 15 MPa $\cdot m^{0.5}$ or more. The toughness value is preferably as large as possible and may be, for example, 35 MPa$\cdot m^{0.5}$ or less or 27 MPa $\cdot m^{0.5}$ or less.

The toughness value is more preferably 13 MPa $\cdot m^{0.5}$ or more and 35 MPa $\cdot m^{0.5}$ or less, even more preferably 15 MPa $\cdot m^{0.5}$ or more and 27 MPa $\cdot m^{0.5}$ or less.

When the toughness value is 10 MPa $\cdot m^{0.5}$ or more, the zirconia sintered body can be regarded as having higher toughness. The toughness value is determined by the method described in Examples.

<Relative sintered density>

The relative sintered density of the zirconia sintered body is preferably 98% or more, more preferably 98.5% or more. When the relative sintered density is 98% or more, the zirconia sintered body can be regarded as having sufficiently been sintered. Further, when the relative sintered density is 98% or more, the zirconia sintered body can be regarded as having higher strength.

<Method for measuring relative sintered density of zirconia sintered body>

The relative sintered density refers to a relative sintered density represented by the following formula (1):

Relative sintered density (%) = (sintered density/theoretical sintered density) $\times$ 100 　　　　　(1)

Here, the theoretical sintered density (denoted by $\rho_0$) is a value calculated by the following formula (2-1):

$$\rho_0 = 100/[(A/3.99) + (100 - A)/\rho z] \ \ldots \ (2-1)$$

wherein A is the concentration (wt%) of alumina and $\rho z$ is a value calculated by the following formula (2-2):

$$\rho z = -0.0400 (\text{molar concentration of CaO}) + 6.1700 \ldots$$

$$(2-2)$$

The theoretical sintered density (denoted by $\rho_1$) in the case of containing another component (stabilizer and colorant) other than alumina is a value calculated by the following formula (2-3):

$$\rho_1 = 100/[(Z/V) + (100 - Z)/\rho_0] \ldots (2-3)$$

wherein Z is the concentration (wt%) of another component other than alumina and V is the theoretical density (g/cm$^3$) of the another component.

The theoretical sintered density (denoted by $\rho_2$) in the case of containing two types of other components other than alumina is a value calculated by the following formula (2-4):

$$\rho_2 = 100/[(Z1/V1) + (Z2/V2) + (100 - Z1 - Z2)/\rho_0] \ldots (2-4)$$

wherein Z1 is the concentration (wt%) of the first another component other than alumina, Z2 is the concentration (wt%) of the second another component other than alumina, V1 is the theoretical density (g/cm$^3$) of the first another component, and V2 is the theoretical density (g/cm$^3$) of the second another component.

The theoretical density of the another component is 5.01 g/cm$^3$ for $Y_2O_3$, 8.64 g/cm$^3$ for $Er_2O_3$, 7.22 g/cm$^3$ for $CeO_2$, 7.24 g/cm$^3$ for $Nd_2O_3$, 6.51 g/cm$^3$ for $La_2O_3$, 7.81 g/cm$^3$ for $Tb_2O_3$, 9.17 g/cm$^3$ for $Yb_2O_3$, 5.24 g/cm$^3$ for $Fe_2O_3$, 5.61 g/cm$^3$ for $ZnO$, 5.03 g/cm$^3$ for $MnO_2$, 6.10 g/cm$^3$ for $CoO$, 4.23 g/cm$^3$ for $TiO_2$, and 6.31 g/cm$^3$ for $CuO$.

The sintered density is measured by Archimedes method.

The zirconia sintered body preferably contains $Al_2O_3$ (alumina) in an amount of 3 mass% or less relative to the entire amount of the zirconia sintered body. When contained in an amount of 3 mass% or less, alumina functions as a sintering aid when the zirconia sintered body is obtained by sintering the zirconia powder. Therefore, the zirconia sintered body can be regarded as having been obtained by sintering the zirconia powder having a wider sinterable temperature range.

When the zirconia sintered body contains $Al_2O_3$, the content of the $Al_2O_3$ is more preferably 2.0 mass% or less, even more preferably 1.0 mass% or less from the viewpoint of allowing the $Al_2O_3$ to appropriately function as a sintering aid.

When the zirconia sintered body contains $Al_2O_3$, the content of the $Al_2O_3$ is more preferably 0.05 mass% or more, even more preferably 0.1 mass% or more from the viewpoint of allowing the $Al_2O_3$ to appropriately function as a sintering aid.

When the zirconia sintered body contains $Al_2O_3$, the content of the $Al_2O_3$ is more preferably 0.05 mass% or more and 2.0 mass% or less, even more preferably 0.1 mass% or more and 1.0 mass% or less.

It should be noted that the zirconia powder does not always need to contain $Al_2O_3$ (alumina) because the zirconia powder has a wide sinterable temperature range and the resulting sintered body has high hydrothermal degradation resistance. When the zirconia powder before sintering does not contain $Al_2O_3$ (alumina), a zirconia sintered body obtained by sintering such a zirconia powder does not contain $Al_2O_3$ (alumina).

In addition to or instead of alumina, the zirconia sintered body may contain sinterable ceramics, a thermosetting resin, or the like for the purpose of improving characteristics such as strength.

The zirconia sintered body may contain at least one element selected from the group consisting of Fe, V, Mn, Co, Zn, Cu, and Ti. When at least one element selected from the group consisting of Fe, V, Mn, Co, Zn, Cu, and Ti is contained, the zirconia sintered body can appropriately be colored.

The form of the element is not limited, and the element can be added in the form of an oxide, a chloride, or the like. Specific examples of the oxide containing such an element include $Fe_2O_3$, $V_2O_5$, $MnO_2$, $CoO$, $ZnO$, $CuO$, and $TiO_2$.

When the $Fe_2O_2$ is contained, the content of the $Fe_2O_2$ is preferably 0.005 mass% or more and 1 mass% or less, more preferably 0.05 mass% or more and 0.5 mass% or less when the entire amount of the zirconia powder is taken as 100 mass%. When the content of the $Fe_2O_2$ is 0.005 mass% or more, intended coloring is easily achieved. That is, the color tone can easily be adjusted.

When the $V_2O_5$ is contained, the content of the $V_2O_2$ is preferably 0.005 mass% or more and 0.5 mass% or less, more preferably 0.01 mass% or more and 0.1 mass% or less when the entire amount of the zirconia powder is taken as 100 mass%. When the content of the $V_2O_2$ is 0.005 mass% or more, intended coloring is easily achieved. That is, the color tone can easily be adjusted.

When the $MnO_2$ is contained, the content of the $MnO_2$ is preferably 0.005 mass% or more and 2 mass% or less, more preferably 0.1 mass% or more and 1.1 mass% or less when the entire amount of the zirconia powder is taken as 100 mass%. When the content of the $MnO_2$ is 0.005 mass% or more, intended coloring is easily achieved. That is, the color tone can easily be adjusted.

When the CoO is contained, the content of the CoO is preferably 0.005 mass% or more and 2 mass% or less, more preferably 0.01 mass% or more and 1.5 mass% or less when the entire amount of the zirconia powder is taken as 100 mass%. When the content of the CoO is 0.005 mass% or more, intended coloring is easily achieved. That is, the color tone can easily be adjusted.

When the ZnO is contained, the content of the ZnO is preferably 0.005 mass% or more and 1 mass% or less, more preferably 0.1 mass% or more and 0.5 mass% or less when the entire amount of the zirconia powder is taken as 100 mass%. When the content of the ZnO is 0.005 mass% or more, intended coloring is easily achieved. That is, the color tone can easily be adjusted.

When CuO is contained as the colorant, the content of the colorant is preferably 0.005 mass% or more and 1 mass% or less, more preferably 0.05 mass% or more and 0.6 mass% or less, even more preferably 0.1 mass% or more and 0.3 mass% or less when the entire amount of the zirconia powder is taken as 100 mass%. When the content of the colorant is 0.005 mass% or more, intended coloring is easily achieved. That is, the color tone can easily be adjusted.

When the $TiO_2$ is contained, the content of the $TiO_2$ is preferably 0.005 mass% or more and 2 mass% or less, more preferably 0.01 mass% or more and 1 mass% or less when the entire amount of the zirconia powder is taken as 100 mass%. When the content of the $TiO_2$ is 0.005 mass% or more, intended coloring is easily achieved. That is, the color tone can easily be adjusted.

The zirconia sintered body according to the present embodiment can be obtained by pressureless sintering using the zirconia powder described above. Specifically, the zirconia sintered body according to the present embodiment can be obtained by, for example, the above-described method for producing a zirconia sintered body.

The zirconia sintered body according to the present embodiment can be used as an industrial part, an aesthetic part, or a dental material. More specifically, the zirconia sintered body can be used for jewelry, watch parts, watch faces, artificial teeth, members for molding processing, wear resistant members, chemical resistant members, etc.

EXAMPLES

Hereinafter, the present invention will be described in detail with reference to Examples, but the present invention is not limited to the following Examples, and other examples are possible as long as they do not depart from the gist of the present invention. The zirconia powder and the zirconia sintered body in each of Examples and Comparative Examples contain hafnium oxide as an unavoidable impurity in an amount of 1.3 to 2.5 mass% (calculated by the following Formula (X)) relative to zirconium oxide. <Formula (X)>

$$((\text{mass of hafnium oxide}]/([\text{mass of zirconium oxide}] + [\text{mass of hafnium oxide}])) \times 100\ (\%) \qquad \text{<Formula (X)>}$$

[Preparation of zirconia powder]

(Example 1)

First, 213 g of a 25 mass% aqueous sodium sulfate solution and 450 g of an aqueous zirconium oxychloride solution with a concentration of 16 mass% in terms of $ZrO_2$ (acid concentration: 1N) were separately heated to 95°C (step 1). Then, the heated aqueous solutions were brought into contact with each other over 2 minutes so that the mass ratio $SO_4^{2-}/ZrO_2$ in the mixed liquid was 0.50 (step 2).

Then, the obtained basic zirconium sulfate-containing reaction liquid was aged by maintaining it at 95°C for 4 hours to obtain basic zirconium sulfate (step 3).

Then, the aged solution was cooled to room temperature, and then an aqueous yttrium chloride solution with a concentration of 10 mass% in terms of $Y_2O_3$ was added so that the concentration of $Y_2O_3$ was 0.1 mol%, and the resultant was uniformly mixed (step 4).

Then, an aqueous calcium chloride solution with a concentration of 10 mass% in terms of CaO was added to the obtained mixed solution so that the concentration of CaO was 4.0 mol%, and the resultant was uniformed mixed (step 5).

Then, a 25 mass% aqueous sodium hydroxide solution was added to the obtained mixed solution to neutralize the mixed solution until the pH reached 13 or higher so that a hydroxide precipitate was formed (step 6).

The obtained hydroxide precipitate was collected by filtration and washed with water, and the resultant was dried at 105°C for 24 hours. The dried hydroxide was thermally treated at 950°C (firing temperature) in the air for 2 hours to obtain an unpulverized zirconia-based powder (calcia/yttria-stabilized zirconia-based powder) (step 7).

An alumina powder having an average particle diameter of primary particles of 0.1 um was added to the obtained unpulverized calcia/yttria-stabilized zirconia-based powder in an amount of 0.25 mass% relative to the calcia/yttria-stabilized zirconia-based powder, and the resultant was pulverized and mixed for 40 hours with a wet ball mill using water as a dispersion medium. The pulverization was performed using $\varphi$ 5-mm zirconia beads. A zirconia slurry obtained after the pulverization was dried at 110°C to obtain a zirconia powder according to Example 1.

Specifically, the above operation was performed with an apparatus as described with reference to Fig. 1.

(Example 2 to Example 7, Example 16, and Comparative Example 1 to Comparative Example 2)

Zirconia powders according to Example 2 to Example 7, Example 16, and Comparative Example 1 to Comparative Example 2 were obtained in the same manner as in Example 1 except that the amount of the aqueous calcium chloride solution added was changed so that the amount of CaO added was as shown in Table 1, the amount of the aqueous yttrium chloride solution added was changed so that the amount of $Y_2O_3$ added was as shown in Table 1, and the amount of the alumina powder added was changed as shown in Table 1. It should be noted that in Example 6, a zirconia powder according to Example 6 was obtained by further changing the firing temperature of the hydroxide from 950°C to 1100°C in addition to the above changes.

In Table 1, "-" means not added (i.e., the additive amount is 0) .

(Example 8)

A zirconia powder according to Example 8 was obtained in the same manner as in Example 1 except that the amount of the aqueous calcium chloride solution added was changed so that the amount of CaO added was as shown in Table 1, and an aqueous erbium chloride solution with a concentration of 10 mass% in terms of $Er_2O_3$ was added so that the concentration of $Er_2O_3$ was 1.0 mol% instead of adding the aqueous yttrium chloride solution.

(Example 9)

A zirconia powder according to Example 9 was obtained in the same manner as in Example 1 except that an aqueous cerium chloride solution with a concentration of 10 mass% in terms of $CeO_2$ was added so that the concentration of $CeO_2$ was 0.5 mol% instead of adding the aqueous yttrium chloride solution.

(Example 10)

A zirconia powder according to Example 10 was obtained in the same manner as in Example 1 except that the amount of the aqueous calcium chloride solution added was changed so that the amount of CaO added was as shown in Table 1, and an aqueous cerium chloride solution with a concentration of 10 mass% in terms of $CeO_2$ was added so that the concentration of $CeO_2$ was 2.5 mol% instead of adding the aqueous yttrium chloride solution.

(Example 11)

A zirconia powder according to Example 11 was obtained in the same manner as in Example 1 except that the amount of the aqueous calcium chloride solution added was changed so that the amount of CaO added was as shown in Table 1, and an aqueous neodymium chloride solution with a concentration of 10 mass% in terms of $Nd_2O_3$ was added so that the concentration of $Nd_2O_3$ was 0.6 mol% instead of adding the aqueous yttrium chloride solution.

(Example 12)

A zirconia powder according to Example 12 was obtained in the same manner as in Example 1 except that the amount of the aqueous calcium chloride solution added was changed so that the amount of CaO added was as shown in Table 1, and an aqueous lanthanum chloride solution with a concentration of 10 mass% in terms of $La_2O_3$ was added so that the concentration of $La_2O_3$ was 0.6 mol% instead of adding the aqueous yttrium chloride solution.

(Example 13)

A zirconia powder according to Example 13 was obtained in the same manner as in Example 1 except that the amount of the aqueous calcium chloride solution added was changed so that the amount of CaO added was as shown in Table 1, and an aqueous terbium chloride solution with a concentration of 10 mass% in terms of $Tb_2O_3$ was added so

that the concentration of $Tb_2O_3$ was 0.4 mol% instead of adding the aqueous yttrium chloride solution.

(Example 14)

A zirconia powder according to Example 14 was obtained in the same manner as in Example 1 except that the amount of the aqueous calcium chloride solution added was changed so that the amount of CaO added was as shown in Table 1, and an aqueous ytterbium chloride solution with a concentration of 10 mass% in terms of $Yb_2O_3$ was added so that the concentration of $Yb_2O_3$ was 0.9 mol% instead of adding the aqueous yttrium chloride solution.

(Example 15)

A zirconia powder according to Example 15 was obtained in the same manner as in Example 1 except that the amount of the aqueous calcium chloride solution added was changed so that the amount of CaO added was as shown in Table 1, an aqueous yttrium chloride solution with a concentration of 10 mass% in terms of $Y_2O_3$ was added so that the concentration of $Y_2O_3$ was 0.5 mol%, and an aqueous erbium chloride solution with a concentration of 10 mass% in terms of $Er_2O_3$ was further added so that the concentration of $Er_2O_3$ was 0.3 mol%.

(Example 17)

A zirconia powder according to Example 17 was obtained in the same manner as in Example 1 except that the amount of the aqueous calcium chloride solution added was changed so that the amount of CaO added was as shown in Table 1, and an aqueous erbium chloride solution with a concentration of 10 mass% in terms of $Er_2O_3$ was added so that the concentration of $Er_2O_3$ was 0.8 mol% instead of adding the aqueous yttrium chloride solution.

(Example 18)

A zirconia powder according to Example 18 was obtained in the same manner as in Example 1 except that the amount of the aqueous calcium chloride solution added was changed so that the amount of CaO added was as shown in Table 1, and an aqueous ytterbium chloride solution with a concentration of 10 mass% in terms of $Yb_2O_3$ was added so that the concentration of $Yb_2O_3$ was 0.6 mol% instead of adding the aqueous yttrium chloride solution.

[Measurement of specific surface area]

The specific surface area of the zirconia powder of each of Examples and Comparative Examples was measured by BET method using a specific surface area meter ("Macsorb" manufactured by Mountec Co., Ltd.). The results are shown in Table 2.

[Measurement of particle diameter $D_{50}$]

First, 0.15 g of the zirconia powder of each of Examples and Comparative Examples and 40 mL of a 0.2% sodium hexametaphosphate aqueous solution were placed in a 50-mL beaker, the zirconia powder was dispersed by an ultrasonic homogenizer "Sonifier S-450D" (Emerson Japan, Ltd.) for 2 minutes, and then the resultant was placed in a device (laser diffraction-type particle size distribution measuring device ("SALD-2300" manufactured by Shimadzu Corporation)) for measurement. The results are shown in Table 2.

[Measurement of crystallite diameter]

The crystallite diameter of the zirconia powder of each of Examples and Comparative Examples was calculated by applying a result obtained by measurement using an X-ray diffractometer "RINT-2500" (manufactured by Rigaku Corporation) to the following Scherrer formula:

$$Dp = (K \times \lambda)/\beta \cos\theta$$

wherein Dp is the crystallite diameter of a fluorescent agent; $\lambda$ is the wavelength of X-rays; $\theta$ is a diffraction angle; K is a constant referred to as a shape factor; and $\beta$ is a peak width after the spread of a diffraction line derived from the device is corrected.

[Measurement of pore volume]

The pore distribution of the zirconia powder of each of Examples and Comparative Examples was obtained by a mercury intrusion method using a pore distribution measuring device ("Autopore IV9500" manufactured by Micromeritics). The measurement conditions were set as follows.

<Measurement conditions>

Measuring device: Pore distribution measuring device

(Autopore IV9500 manufactured by Micromeritics)

Measuring range: 0.0036 to 10.3 um
Number of measurement points: 120 points
Mercury contact angle: 140 degrees
Mercury surface tension: 480 dyne/cm

Using the obtained pore distribution, a peak top diameter, a pore volume, and a pore distribution width in a range of 10 nm or more and 200 nm or less were determined. The results are shown in Table 2.
Here, the pore distribution width refers to a width of a peak at which the log differential pore volume is 0.1 mL/g or more.

[Composition measurement]

The composition (in terms of oxides) of the zirconia powder of each of Examples and Comparative Examples was analyzed using ICP-AES ("ULTIMA-2" manufactured by HORIBA). The results are shown in Table 1.

[Difference between average crystal grain diameters at different sintering temperatures]

First, the zirconia powder of each of Examples and Comparative Examples was molded at a molding pressure of 2 t/cm$^2$. Then, the molded bodies were sintered by heating under atmospheric pressure for 2 hours. The sintering temperatures were as shown in Table 3 or Table 4.
Then, the average crystal grain diameters of sinters (sintered bodies) obtained at different sintering temperatures were measured. The average crystal grain diameters were measured by the following method. The results are shown in Tables 3 and 4.

<Method for measuring average crystal grain diameter>

The SEM observation image of sample of the sintered body obtained by scanning electron microscopy was used to determine an average crystal grain diameter. The sample for SEM observation was prepared in accordance with JIS R 1633. The number of crystal grains per visual field of the SEM observation image was set to 150 or more. A rectangle of any size was drawn in the SEM observation image, and the number of grains present on the sides and diagonal lines of the rectangle was counted. The length of each of the sides of the rectangle was set to be equal to or more than 80% of the visual field. The ratio between the vertical and horizontal lengths of the rectangle was set to 1.47 : 1 (horizontal length: vertical length). The average crystal grain diameter was calculated from the numbers of grains and the lengths of four sides and diagonal lines of the rectangle.
Specifically, the average crystal grain diameter was calculated by the following formula.

(Average crystal grain diameter) = {[XX/X1 + x2)] + [Y/(y1 + y2)] + [D/(d1 + d2)]} × 2/3

It should be noted that X, x1, x2, Y, y1, y2, D, d1, and d2 in the formula are as follows.

X ($\mu$m): Length of long side of rectangle
Y (um): Length of short side of rectangle
D (um): Length of diagonal line of rectangle

x1 (number of grains): Number of grains on one of long sides
x2 (number of grains) : Number of gains on the other long side
y1 (number of grains): Number of grains on one of short sides
y2 (number of grains) : Number of grains on the other short side
d1 (number of grains) : Number of grains on one of diagonal lines
d2 (number of grains: Number of grains on the other diagonal line

The same operation was performed for three visual fields at each level, and the average of average crystal grain diameters of the three visual fields was defined as a final average crystal grain diameter.

It should be noted that prior to the measurement, the sintered body sample was pretreated by mirror polishing and then by thermal etching. The mirror polishing was performed by grinding the surface of the sintered body with a surface grinder and then polishing it with a mirror polishing device while changing the average particle diameter of diamond abrasive grains used in the order of 9 um, 6 $\mu$m, and 3 $\mu$m.

Then, for the sinters (sintered bodies) of each of Examples and Comparative Examples after the measurement of their crystal grain diameters, a minimum sintering temperature (temperature A) at which the following <Characteristic 1>, <Characteristic 2>, <Characteristic 3>, and <Characteristic 4> were satisfied and a maximum sintering temperature (temperature B) at which the following <Characteristic 1>, <Characteristic 2>, <Characteristic 3>, and <Characteristic 4> were satisfied were determined. It should be noted that <Characteristic 1>, <Characteristic 2>, <Characteristic 3>, and <Characteristic 4> were measured by the same methods as described later with reference to the relative sintered density, toughness value, three-point bending strength, and monoclinic fraction after hydrothermal treatment at 134°C and 0.3 MPa for 15 hours of a zirconia sintered body.

<Characteristic 1>

A relative sintered density is 98.0% or more.

<Characteristic 2>

A toughness value as measured by IF method is 10 MPa $\cdot$m$^{0.5}$ or more.

<Characteristic 3>

A three-point bending strength is 700 MPa or more.

<Characteristic 4>

A monoclinic fraction after hydrothermal treatment at 134°C and 0.3 MPa (absolute pressure 0.3 MPa) for 15 hours is 30% or less.

For example, in Example 1, when the sintering temperature was 1250°C, the relative sintered density was 99.7%, the toughness value was 17 MPa·m$^{0.5}$, the three-point bending strength was 800 MPa, and the monoclinic fraction after hydrothermal treatment at 134°C and 0.3 MPa for 15 hours was 0.6%, and therefore a sintering temperature of 1250°C was determined as the temperature A. Further, in Example 1, when the sintering temperature was 1325°C, <Characteristic 1>, <Characteristic 2>, <Characteristic 3>, and <Characteristic 4> were satisfied, and therefore a sintering temperature of 1325°C was determined as the temperature B.

Then, the difference between an average crystal grain diameter B when sintering was performed at the temperature B and an average crystal grain diameter A when sintering was performed at the temperature A [(average crystal grain diameter B) - (average crystal grain diameter A)] was determined. The results are shown in Table 2. For example, in Example 1, the difference between an average crystal grain diameter A (122 nm) when sintering was performed at the temperature B (1325°C) and an average crystal grain diameter A (66 nm) when sintering was performed at the temperature A (1250°C) [(average crystal grain diameter B) - (average crystal grain diameter A)] was 56 nm.

In the same manner, in Example 2, the temperature A was determined as 1200°C and the temperature B was determined as 1325°C. The difference [(average crystal grain diameter B) - (average crystal grain diameter A)] was 70 nm.

In Example 3, the temperature A was determined as 1200°C and the temperature B was determined as 1350°C. The difference [(average crystal grain diameter B) - (average crystal grain diameter A)] was 78 nm.

In Example 4, the temperature A was determined as 1200°C and the temperature B was determined as 1350°C. The difference [(average crystal grain diameter B) - (average crystal grain diameter A)] was 77 nm.

In Example 5, the temperature A was determined as 1200°C and the temperature B was determined as 1350°C. The difference [(average crystal grain diameter B) - (average crystal grain diameter A)] was 74 nm.

In Example 6, the temperature A was determined as 1250°C and the temperature B was determined as 1375°C. The difference [(average crystal grain diameter B) - (average crystal grain diameter A)] was 59 nm.

In Example 7, the temperature A was determined as 1250°C and the temperature B was determined as 1400°C. The difference [(average crystal grain diameter B) - (average crystal grain diameter A)] was 65 nm.

In Example 8, the temperature A was determined as 1250°C and the temperature B was determined as 1350°C. The difference [(average crystal grain diameter B) - (average crystal grain diameter A)] was 63 nm.

In Example 9, the temperature A was determined as 1200°C and the temperature B was determined as 1325°C. The difference [(average crystal grain diameter B) - (average crystal grain diameter A)] was 70 nm.

In Example 10, the temperature A was determined as 1200°C and the temperature B was determined as 1350°C. The difference [(average crystal grain diameter B) - (average crystal grain diameter A)] was 73 nm.

In Example 11, the temperature A was determined as 1200°C and the temperature B was determined as 1350°C. The difference [(average crystal grain diameter B) - (average crystal grain diameter A)] was 85 nm.

In Example 12, the temperature A was determined as 1200°C and the temperature B was determined as 1350°C. The difference [(average crystal grain diameter B) - (average crystal grain diameter A)] was 78 nm.

In Example 13, the temperature A was determined as 1200°C and the temperature B was determined as 1350°C. The difference [(average crystal grain diameter B) - (average crystal grain diameter A)] was 73 nm.

In Example 14, the temperature A was determined as 1200°C and the temperature B was determined as 1350°C. The difference [(average crystal grain diameter B) - (average crystal grain diameter A)] was 66 nm.

In Example 15, the temperature A was determined as 1200°C and the temperature B was determined as 1350°C. The difference [(average crystal grain diameter B) - (average crystal grain diameter A)] was 73 nm.

In Example 16, the temperature A was determined as 1200°C and the temperature B was determined as 1350°C. The difference [(average crystal grain diameter B) - (average crystal grain diameter A)] was 66 nm.

In Example 17, the temperature A was determined as 1200°C and the temperature B was determined as 1350°C. The difference [(average crystal grain diameter B) - (average crystal grain diameter A)] was 56 nm.

In Example 18, the temperature A was determined as 1200°C and the temperature B was determined as 1350°C. The difference [(average crystal grain diameter B) - (average crystal grain diameter A)] was 65 nm.

In Comparative Example 1, the temperature A was determined as 1225°C and the temperature B was determined as 1275°C. The difference [(average crystal grain diameter B) - (average crystal grain diameter A)] was 24 nm.

In Comparative Example 2, the temperature A was determined as 1250°C and the temperature B was determined as 1300°C. The difference [(average crystal grain diameter B) - (average crystal grain diameter A)] was 32 nm.

It should be noted that, for example, in Example 1, since the relative sintered density is 99.7% when the sintering temperature is 1250°C, the temperature at which the relative sintered density is actually 98% is lower than a sintering temperature of 1250°C.

Further, in Example 1, since the toughness value is 17 MPa·m$^{0.5}$ when the sintering temperature is 1250°C, the temperature at which the toughness value is actually 10 MPa·m$^{0.5}$ or more is lower than a sintering temperature of 1250°C.

Further, in Example 1, since the three-point bending strength is 800 MPa when the sintering temperature is 1250°C, the temperature at which the three-point bending strength is actually 700 MPa or more is lower than a sintering temperature of 1250°C.

Further, in Example 1, since the monoclinic fraction after hydrothermal treatment at 134°C and 0.3 MPa for 15 hours is 0.6% when the sintering temperature is 1250°C, the temperature at which the monoclinic fraction after hydrothermal treatment at 134°C and 0.3 MPa for 15 hours is actually 30% or less is lower than a sintering temperature of 1250°C.

That is, in Example 1, the temperature A is actually lower than 1250°C. However, this measurement is performed to the extent that it is possible to confirm whether or not the difference [(average crystal grain diameter B) - (average crystal grain diameter A)] is 50 nm or more.

Therefore, in Example 1, 1250°C is regarded as the temperature A (minimum sintering temperature at which <Characteristic 1>, <Characteristic 2>, <Characteristic 3>, and <Characteristic 4> are satisfied) for convenience of experiment. This is because when the difference [(average crystal grain diameter B) - (average crystal grain diameter A)] is 50 nm or more even when 1250°C is regarded as the temperature A, the difference [(average crystal grain diameter B) - (average crystal grain diameter A)] is always 50 nm or more even when the minimum sintering temperature at which <Characteristic 1>, <Characteristic 2>, <Characteristic 3>, and <Characteristic 4> are satisfied is actually used.

Further, for example, in Comparative Example 1, since the relative sintered density is 97.9% when the sintering temperature is 1200°C, the temperature at which the relative sintered density is actually 98% is higher than a sintering temperature of 1200°C.

That is, in Comparative Example 1, the temperature A is actually higher than 1200°C. However, in Comparative Example 1, 1200°C is regarded as the temperature A (minimum sintering temperature at which <Characteristic 1>, <Characteristic 2>, <Characteristic 3>, and <Characteristic 4> are satisfied) for convenience of experiment. This is because when the difference [(average crystal grain diameter B) - (average crystal grain diameter A)] is less than 50 nm even when 1200°C is regarded as the temperature A, the difference [(average crystal grain diameter B) - (average crystal grain diameter A)] is always less than 50 nm even when the minimum sintering temperature at which <Characteristic 1>, <Characteristic 2>, <Characteristic 3>, and <Characteristic 4> are satisfied is actually used.

As described above, it was confirmed that the difference [(average crystal grain diameter B) - (average crystal grain diameter A)] of each of the zirconia powders of Example 1 to Example 18 was 50 nm or more. On the other hand, it was confirmed that the difference [(average crystal grain diameter B) - (average crystal grain diameter A)] of each of the zirconia powders of Comparative Examples 1 to 2 was less than 50 nm.

[Production of zirconia sintered body]

First, molded bodies were obtained from the zirconia powders of Examples and Comparative Examples by cold isostatic pressing (CIP). The molding pressure was set to 2 t/cm$^2$.

Then, the molded bodies were sintered at temperatures (sintering temperatures) shown in Table 3 for 2 hours to obtain zirconia sintered bodies.

[Fraction of monoclinic phase (before hydrothermal degradation) contained in crystal phase of zirconia sintered body]

The zirconia sintered bodies of each of Examples and Comparative Examples were mirror-polished, and the fraction of the monoclinic phase (before hydrothermal degradation) contained in the crystal phase was determined. The mirror polishing was performed by grinding the surface of the sintered body with a surface grinder and then polishing it with a mirror polishing device while changing the average particle diameter of diamond abrasive grains used in the order of 9 um, 6 $\mu$m, and 3 um. The results are shown in Tables 3 and 4. It should be noted that although not shown in Table 3 and Table 4, in all the Examples, the cubic fraction was 3% or less.

Specifically, the monoclinic fractions of the zirconia sintered bodies of each of Examples and Comparative Examples were determined in the manner described below in [Identification of crystal phases] .

[Identification of crystal phases]

The X-ray diffraction spectrum of each of the zirconia sintered bodies was obtained using an X-ray diffractometer ("RINT2500" manufactured by Rigaku Corporation). The measurement conditions were set as follows.

<Measurement conditions>

Measuring device: X-ray diffractometer (RINT2500, manufactured by Rigaku Corporation)
Radiation source: CuK$\alpha$ radiation source
Sampling interval: 0.02°
Scanning speed: 2$\Theta$ = 1.0°/min
Divergence slit (DS): 1°
Divergence vertical limit slit: 5 mm
Scatter slit (SS): 1°
Receiving slit (RS): 0.3 mm
Monochrome receiving slit: 0.8 mm
Tube voltage: 50 kV
Tube current: 300 mA
Scanning speed: 2$\Theta$ = 26 to 36°: 4°/min
2$\Theta$ = 72 to 76°: 1°/min

Then, the crystal phases were identified from the X-ray diffraction spectrum. The phase fractions of the crystal phases contained in the zirconia powder and the zirconia sintered body were calculated by the following formulae.

Monoclic fraction (%) = (Im(111) + Im(11-1))/(Im(111) + Im(11-1) + It(101) + Ic(111)) $\times$ 100

Tetragonal fraction (%) = (100% - monoclinic phase (%)) $\times$ ((It(004) + It(220)/(It(004) + It(220) + Ic (004)) $\times$ 100

Cubic fraction (%) = (100% - monoclinic phase (%)) × ((Ic(004)/(It(004) + It(220) + Ic(004)) × 100

Here, Im(111) is the diffraction intensity of (111) in the monoclinic phase, andIm(11-1) is the diffraction intensity of (11-1) in the monoclinic phase.

It(101) is the diffraction intensity of (101) in the tetragonal phase, It (220) is the diffraction intensity of (220) in the tetragonal phase, and It(004) is the diffraction intensity of (004) in the tetragonal phase.

Ic(004) is the diffraction intensity of (004) in the cubic phase and Ic(111) is the diffraction intensity of (111) in the cubic phase.

The monoclinic phase of zirconia was discriminated from the tetragonal phase and the cubic phase in the vicinity of 2θ = 26 to 36° in the XRD spectrum. The tetragonal phase was discriminated from the cubic phase in the vicinity of 2Θ = 72 to 76° in the XRD spectrum. The cubic phase may be distorted depending on the amount of the stabilizer added and the type of production method used, which may cause a peak position to shift. However, in the present Examples, a peak between (004) and (220) in the tetragonal phase was calculated as the peak of the cubic phase.

[Monoclinic fraction after hydrothermal treatment at 134°C and 0.3 MPa for 15 hours]

First, each of the zirconia sintered bodies of each of Examples and Comparative Examples was subjected to hydrothermal treatment at 134°C and an absolute pressure of 0.3 MPa (in an underwater environment) for 15 hours. Then, the fraction of the monoclinic phase contained in the crystal phase of the zirconia sintered body after hydrothermal treatment was determined. The monoclinic fraction of the zirconia sintered body after hydrothermal treatment was determined in the same manner as described in the section of [Fraction of monoclinic phase contained as crystal phase in zirconia powder]. The results are shown in Tables 3 and 4.

Further, in Table 3 and Table 4, a change in monoclinic fraction before and after hydrothermal degradation (a value obtained by subtracting the monoclinic fraction before hydrothermal treatment from the monoclinic fraction after hydrothermal treatment) is also shown.

[Monoclinic fraction after hydrothermal treatment at 300°C and 8 MPa for 5 hours]

First, each of the zirconia sintered bodies of each of Examples 2 to 4, 9 to 13, and 17 to 18 and Comparative Example 2 was subjected to hydrothermal treatment at 300°C and an absolute pressure of 8 MPa (in an underwater environment) for 5 hours. Then, the fraction of the monoclinic phase contained in the crystal phase of the zirconia sintered body after hydrothermal treatment was determined. The monoclinic fraction of the zirconia sintered body after hydrothermal treatment was determined in the same manner as described in the section of [Fraction of monoclinic phase contained as crystal phase in zirconia powder] . The results are shown in Table 5.

[Monoclinic fraction after hydrothermal treatment at 400°C and 30 MPa for 5 hours]

First, each of the zirconia sintered bodies of each of Examples 2 to 4, 9 to 13, and 17 to 18 and Comparative Example 2 was subjected to hydrothermal treatment at 400°C and an absolute pressure of 30 MPa (in an underwater environment) for 5 hours. Then, the fraction of the monoclinic phase contained in the crystal phase of the zirconia sintered body after hydrothermal treatment was determined. The monoclinic fraction of the zirconia sintered body after hydrothermal treatment was determined in the same manner as described in the section of [Fraction of monoclinic phase contained as crystal phase in zirconia powder] . The results are shown in Table 5.

Further, in Table 5, a change in monoclinic fraction before and after hydrothermal treatment at 400°C and 30 MPa for 5 hours (a value obtained by subtracting the monoclinic fraction before hydrothermal treatment from the monoclinic fraction after hydrothermal treatment) is also shown.

[Three-point bending strength]

The three-point bending strength of the zirconia sintered body of each of Examples and Comparative Examples obtained above was measured in accordance with three-point bending strength specified in JIS R 1601. The results are shown in Tables 3 and 4.

<Toughness>

The measurement of toughness based on IF method was performed by a method in accordance with JIS R 1607 (Testing methods for fracture toughness of fine ceramics at room temperature) using a load of 30 kgf (294.2 N). Seven quadrangular indentations formed by a Vickers hardness tester were selected to determine toughness values, and the average of five toughness values excluding the minimum and maximum values was defined as a toughness value. It should be noted that indentations from which no crack was extended were not used for measurement, and rectangular indentations having four tips from which cracks were extended were used.

The toughness values were calculated by the following formula.

$$Kc = 0.018 \times Hv \times a^{0.5} \times [(c - a)/a]^{-0.5} \times (Hv/E)^{-0.4}$$

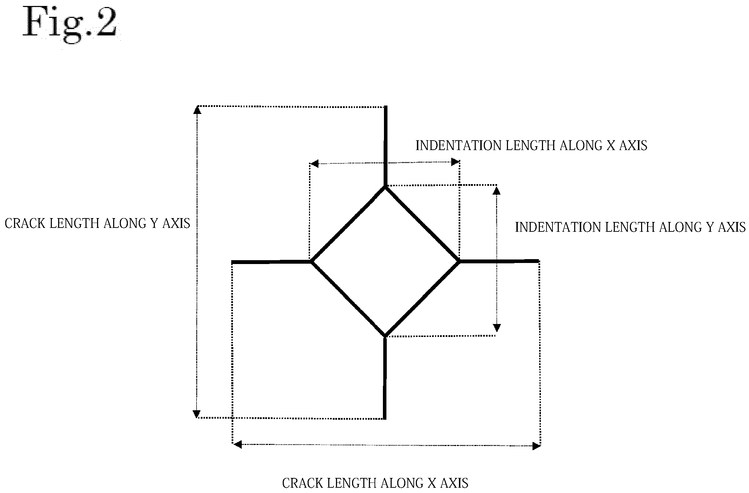

Kc, Hv, a, c, and E mean the following. The indentation lengths along the X and Y axes and the crack lengths along the X and Y axes for determining a and c are as shown in Fig. 2.

Kc: Toughness value [MPa $\cdot$m$^{0.5}$]
Hv: Vickers hardness [GPa]
a: Half of average of indentation lengths along X and Y axes [gm]
c: Half of average of crack lengths along X and Y axes [$\mu$m]
E: Young's modulus [GPa]

The Vickers hardness was determined in accordance with JIS R 1610 (Test methods for hardness of fine ceramics). The Vickers hardness was calculated by the following formula.

$$Hv = 0.001854 \times [F/d^2 Sv]$$

F and d mean the following. The X-axis indentation length and the Y-axis indentation length for determining d are as shown in Fig. 2.

Hv: Vickers hardness [GPa]
F: Test force [N]
d: Average [mm] of X-axis indentation length and Y-axis indentation length

As the Young's modulus, 210 GPa, which is known as a Young's modulus of common yttria-stabilized zirconia, was used.

[Relative sintered density]

The relative sintered density of each of the obtained zirconia sintered bodies was determined as follows. The results are shown in Tables 3 and 4.

Relative sintered density (%) = (sintered density/theoretical sintered density) $\times$ 100        (1)

Here, the theoretical sintered density (denoted by $\rho_0$) is a value calculated by the following formula (2-1):

$$\rho_0 = 100/[(A/3.99) + (100 - A)/\rho z] \ldots (2-1)$$

wherein A is the concentration (wt%) of alumina and $\rho z$ is a value calculated by the following formula (2-2):

$$\rho z = -0.0400 (\text{molar concentration of CaO}) + 6.1700 \ldots$$

$$(2-2)$$

The theoretical sintered density (denoted by $\rho_1$) in the case of containing another component (stabilizer and colorant) other than alumina is a value calculated by the following formula (2-3) :

$$\rho_1 = 100/[(Z/V) + (100 - Z)/\rho_0] \quad \cdots \quad (2-3)$$

wherein Z is the concentration (wt%) of another component other than alumina and V is the theoretical density (g/cm³) of the another component.

The theoretical sintered density (denoted by $\rho_2$) in the case of containing two types of other components other than alumina is a value calculated by the following formula (2-4) :

$$\rho_2 = 100/[(Z1/V1) + (Z2/V2) + (100 - Z1 - Z2)/\rho_0] \quad \cdots \quad (2-4)$$

wherein Z1 is the concentration (wt%) of the first another component other than alumina, Z2 is the concentration (wt%) of the second another component other than alumina, V1 is the theoretical density (g/cm³) of the first another component, and V2 is the theoretical density (g/cm³) of the second another component.

The theoretical density of the another component is 5.01 g/cm³ for $Y_2O_3$, 8.64 g/cm³ for $Er_2O_3$, 7.22 g/cm³ for $CeO_2$, 7.24 g/cm³ for $Nd_2O_3$, 6.51 g/cm³ for $La_2O_3$, 7.81 g/cm³ for $Tb_2O_3$, 9.17 g/cm³ for $Yb_2O_3$, 5.24 g/cm³ for $Fe_2O_3$, 5.61 g/cm³ for ZnO, 5.03 g/cm³ for $MnO_2$, 6.10 g/cm³ for CoO, 4.23 g/cm³ for $TiO_2$, and 6.31 g/cm³ for CuO.

The sintered density was measured by Archimedes method.

<Relative molding density>

Relative molding density (%) = (molding density/theoretical sintered density) × 100 (4)

Here, the theoretical sintered density (denoted by $\rho_0$) is a value calculated by the above formula (2-1).

[Table 1]

| | | Stabilizer | | | | | | | | | Sintering aid |
|---|---|---|---|---|---|---|---|---|---|---|---|
| | Total amount of stabilizer | CaO/total amount of stabilizer | CaO | $Y_2O_3$ | $Er_2O_3$ | $CeO_2$ | $Nd_2O_3$ | $La_2O_3$ | $Tb_2O_3$ | $Yb_2O_3$ | $Al_2O_3$ |
| | mol% | % | mol% | mol% | mol% | mol% | mol% | mol% | mol% | mol% | mass% |
| Example 1 | 4.1 | 97.6 | 4.0 | 0.1 | - | - | - | - | - | - | 0.25 |
| Example 2 | 4.0 | 92.5 | 3.7 | 0.3 | - | - | - | - | - | - | 0.25 |
| Example 3 | 3.6 | 86. 1 | 3.1 | 0.5 | - | - | - | - | - | - | 0.25 |
| Example 4 | 3.1 | 74.2 | 2.3 | 0.8 | - | - | - | - | - | - | 0.25 |
| Example 5 | 2.6 | 69.2 | 1.8 | 0.8 | - | - | - | - | - | - | 0.25 |
| Example 6 | 3.0 | 70.0 | 2.1 | 0.9 | - | - | - | - | - | - | 0.25 |
| Example 7 | 3.0 | 70.0 | 2.1 | 0.9 | - | - | - | - | - | - | - |
| Example 8 | 2.9 | 65.5 | 1.9 | - | 1.0 | - | - | - | - | - | 0.25 |
| Example 9 | 4.5 | 88.9 | 4.0 | - | - | 0.5 | - | - | - | - | 0.25 |
| Example 10 | 6.0 | 58.3 | 3.5 | - | - | 2.5 | - | - | - | - | 0.25 |
| Example 11 | 3.8 | 84.2 | 3.2 | - | - | - | 0.6 | - | - | - | 0.25 |
| Example 12 | 3.8 | 84.2 | 3.2 | - | - | - | - | 0.6 | - | - | 0.25 |

(continued)

| | Stabilizer | | | | | | | | | | Sintering aid |
| | Total amount of stabilizer | CaO/total amount of stabilizer | CaO | $Y_2O_3$ | $Er_2O_3$ | $CeO_2$ | $Nd_2O_3$ | $La_2O_3$ | $Tb_2O_3$ | $Yb_2O_3$ | $Al_2O_3$ |
| | mol% | % | mol% | mol% | mol% | mol% | mol% | mol% | mol% | mol% | mass% |
|---|---|---|---|---|---|---|---|---|---|---|---|
| Example 13 | 3.5 | 88.6 | 3.1 | - | - | - | - | - | 0.4 | | 0.25 |
| Example 14 | 2.9 | 69.0 | 2.0 | - | - | - | - | - | - | 0.9 | 0.25 |
| Example 15 | 2.9 | 72.4 | 2.1 | 0.5 | 0.3 | - | - | - | - | - | 0.25 |
| Example 16 | 3.0 | 70.0 | 2.1 | 0.9 | - | - | - | - | - | - | 1.50 |
| Example 17 | 4.0 | 80.0 | 3.2 | - | 0.8 | - | - | - | - | - | 0.25 |
| Example 18 | 3.8 | 84.2 | 3.2 | - | - | - | - | - | - | 0.6 | 0.25 |
| Comparative Example 1 | 4.1 | 100.0 | 4.1 | - | - | - | - | - | - | - | 0.25 |
| Comparative Example 2 | 2.6 | 38.5 | 1.0 | 1.6 | - | - | - | - | - | - | 0.25 |

[Table 2]

| | Powder physical properties | | | | | | Crystal grain diameter of sintered body | | Difference between average crystal grain diameters at different sintering temperatures |
| | Specific surface area | Particle diameter $D_{50}$ | Crystallite diameter | Peak top diameter | Pore distribution width | Pore volume | Average crystal grain diameter B | Average crystal grain diameter A | [(average crystal grain diameter B) - (average crystal grain diameter A)] |
| | $m^2/g$ | $\mu m$ | nm | nm | nm | mL/g | nm | nm | nm |
|---|---|---|---|---|---|---|---|---|---|
| Example 1 | 25.4 | 0.66 | 23 | 70 | 84 | 0.34 | 122 | 66 | 56 |
| Example 2 | 24.6 | 0.60 | 23 | 75 | 92 | 0.37 | 128 | 58 | 70 |
| Example 3 | 27.8 | 0.68 | 24 | 62 | 69 | 0.33 | 133 | 55 | 78 |
| Example 4 | 26.4 | 0.56 | 24 | 68 | 83 | 0.38 | 132 | 55 | 77 |
| Example 5 | 25.6 | 0.50 | 29 | 70 | 89 | 0.33 | 129 | 55 | 74 |
| Example 6 | 15.9 | 0.15 | 34 | 101 | 109 | 0.29 | 137 | 78 | 59 |
| Example 7 | 25.0 | 0.20 | 23 | 72 | 72 | 0.37 | 135 | 70 | 65 |
| Example 8 | 25.0 | 0.29 | 24 | 74 | 78 | 0.38 | 129 | 66 | 63 |
| Example 9 | 24.5 | 0.28 | 26 | 71 | 84 | 0.39 | 130 | 60 | 70 |
| Example 10 | 25.6 | 0.27 | 26 | 73 | 86 | 0.39 | 138 | 65 | 73 |

(continued)

| | Powder physical properties | | | | | | Crystal grain diameter of sintered body | | Difference between average crystal grain diameters at different sintering temperatures |
|---|---|---|---|---|---|---|---|---|---|
| | Specific surface area | Particle diameter $D_{50}$ | Crystallite diameter | Peak top diameter | Pore distribution width | Pore volume | Average crystal grain diameter B | Average crystal grain diameter A | [(average crystal grain diameter B) - (average crystal grain diameter A)] |
| | $m^2/g$ | μm | nm | nm | nm | mL/g | nm | nm | nm |
| Example 11 | 27.2 | 0.21 | 25 | 68 | 63 | 0.37 | 142 | 57 | 85 |
| Example 12 | 28.9 | 0.28 | 25 | 54 | 69 | 0.38 | 133 | 55 | 78 |
| Example 13 | 26.6 | 0.26 | 23 | 68 | 78 | 0.35 | 129 | 56 | 73 |
| Example 14 | 24.3 | 0.35 | 25 | 73 | 69 | 0.36 | 124 | 58 | 66 |
| Example 15 | 25.4 | 0.34 | 24 | 78 | 83 | 0.29 | 136 | 63 | 73 |
| Example 16 | 27.8 | 0.37 | 25 | 80 | 95 | 0.32 | 128 | 62 | 66 |
| Example 17 | 28.9 | 0.29 | 22 | 77 | 94 | 0.38 | 114 | 58 | 56 |
| Example 18 | 27.1 | 0.39 | 25 | 68 | 88 | 0.36 | 119 | 54 | 65 |
| Comparative Example 1 | 22.0 | 0.32 | 27 | 91 | 65 | 0.33 | 92 | 68 | 24 |
| Comparative Example 2 | 24.0 | 0.20 | 26 | 88 | 90 | 0.35 | 147 | 115 | 32 |

[Table 3]

| Example No. | Molded body | | Sintered body | | | | | | | | |
|---|---|---|---|---|---|---|---|---|---|---|---|
| | Relative molding density | Molding pressure | Sintering time | Sintering temperature | Relative density | Average crystal grain diameter | Monoclinic fraction before hydrothermal treatment | Monoclinic fraction after hydrothermal treatment at 134°C and 0.3 MPa for 15 hours | Change in monoclinic fraction before and after hydrothermal treatment at 134°C and 0.3 MPa for 15 hours | Bending strength | Fracture toughness value |
| | % | t/cm² | hr | °C | % | nm | % | % | % | MPa | Mpa·m$^{0.5}$ |
| Example 1 | 45 . 4 | 2 | 2 | 1250 | 99.7 | 66 | 0.6 | 0.6 | 0.0 | 800 | 17 |
| | 45 . 4 | 2 | 2 | 1300 | 99.8 | 80 | 1.9 | 2.0 | 0.1 | 800 | 20 |
| | 45 . 4 | 2 | 2 | 1325 | 99.7 | 122 | 4.8 | 4 . 9 | 0.1 | 800 | 16 |
| Example 2 | 45.7 | 2 | 2 | 1200 | 98.4 | 58 | 0.5 | 0.7 | 0.2 | 900 | 10 |
| | 45.7 | 2 | 2 | 1250 | 99.8 | 66 | 0.6 | 0.8 | 0.2 | 850 | 22 |
| | 45.7 | 2 | 2 | 1300 | 99.9 | 80 | 1. 4 | 3.0 | 1.6 | 850 | 19 |
| | 45.7 | 2 | 2 | 1325 | 99.8 | 128 | 3.2 | 4.0 | 0.8 | 850 | 15 |
| Example 3 | 45.5 | 2 | 2 | 1200 | 98.8 | 55 | 0.9 | 0.5 | 0.1 | 900 | 16 |
| | 95.5 | 2 | 2 | 1250 | 99.8 | 66 | 0.5 | 0.8 | 0.3 | 900 | 27 |
| | 95.5 | 2 | 2 | 1300 | 99.8 | 92 | 1.1 | 3.0 | 1.9 | 900 | 19 |
| | 95.5 | 2 | 2 | 1325 | 99.7 | 120 | 2.3 | 5.0 | 2.7 | 900 | 19 |
| | 45.5 | 2 | 2 | 1350 | 99.7 | 133 | 4.9 | 22.8 | 17.9 | 900 | 15 |
| Example 4 | 46. 1 | 2 | 2 | 1200 | 99.0 | 55 | 0.4 | 1.0 | 06 | 1200 | 16 |
| | 46. 1 | 2 | 2 | 1250 | 99.8 | 66 | 0.5 | 1.2 | 0.7 | 1200 | 29 |
| | 46. 1 | 2 | 2 | 1300 | 99.9 | 84 | 0.9 | 2.0 | 1.1 | 1200 | 20 |
| | 46. 1 | 2 | 2 | 1325 | 99.6 | 118 | 1.3 | 3.0 | 1.7 | 1200 | 25 |
| | 46. 1 | 2 | 2 | 1350 | 99.9 | 132 | 2.0 | 3.5 | 1.5 | 1200 | 23 |

EP 4 428 112 A1

33

| Example No. | Molded body | | Sintered body | | | | | | | | |
|---|---|---|---|---|---|---|---|---|---|---|---|
| | Relative molding density | Molding pressure | Sintering time | Sintering temperature | Relative density | Average crystal grain diameter | Monoclinic fraction before hydrothermal treatment | Monoclinic fraction after hydrothermal treatment at 134°C and 0.3 MPa for 15 hours | Change in monoclinic fraction before and after hydrothermal treatment at 134°C and 0.3 MPa for 15 hours | Bending strength | Fracture toughness value |
| | % | t/cm$^2$ | hr | °C | % | nm | % | % | % | MPa | Mpa·m$^{0.5}$ |
| Example 5 | 46. 4 | 2 | 2 | 1200 | 98.9 | 55 | 0.3 | 1.0 | 0.7 | 1350 | 13 |
| | 46. 4 | 2 | 2 | 1250 | 99.9 | 66 | 0.3 | 1.3 | 1.0 | 1350 | 23 |
| | 46. 4 | 2 | 2 | 1300 | 99.8 | 86 | 0.6 | 2.0 | 1.4 | 1350 | 30 |
| | 46. 4 | 2 | 2 | 1325 | 99.6 | 104 | 1.0 | 3.0 | 2.0 | 1350 | 23 |
| | 46. 4 | 2 | 2 | 1350 | 99.8 | 129 | 1.2 | 4.3 | 3.1 | 1350 | 24 |
| Example 6 | 48.7 | 2 | 2 | 1250 | 99.1 | 78 | 0. 4 | 1.0 | 06 | 1100 | 13 |
| | 48.7 | 2 | 2 | 1300 | 99.4 | 86 | 0.7 | 1.5 | 0.8 | 1100 | 28 |
| | 48.7 | 2 | 2 | 1350 | 99.6 | 129 | 1.3 | 3.0 | 1.7 | 1100 | 23 |
| | 48.7 | 2 | 2 | 1375 | 99.5 | 137 | 3.8 | 21.9 | 18.1 | 1100 | 19 |
| Example 7 | 48.8 | 2 | 2 | 1250 | 99.0 | 70 | 0.3 | 1.3 | 1.0 | 1100 | 13 |
| | 48.8 | 2 | 2 | 1300 | 99.4 | 88 | 0.6 | 2.0 | 1.4 | 1100 | 30 |
| | 48.8 | 2 | 2 | 1350 | 99.8 | 119 | 1.0 | 3.0 | 2.0 | 1100 | 23 |
| | 48.8 | 2 | 2 | 1400 | 99.9 | 135 | 1.2 | 4.3 | 3.1 | 1100 | 19 |
| Example 8 | 45.8 | 2 | 2 | 1250 | 98.6 | 66 | 0.3 | 1.3 | 1.0 | 1200 | 23 |
| | 45.8 | 2 | 2 | 1300 | 99.1 | 82 | 0.6 | 2.0 | 1.4 | 1200 | 27 |
| | 45.8 | 2 | 2 | 1325 | 99.3 | 102 | 1.0 | 3.0 | 2.0 | 1200 | 23 |
| | 45.8 | 2 | 2 | 1350 | 99.4 | 129 | 1.2 | 4.3 | 3.1 | 1200 | 24 |

(continued)

| Example No. | Molded body | | Sintered body | | | | | | | | |
|---|---|---|---|---|---|---|---|---|---|---|---|
| | Relative molding density | Molding pressure | Sintering time | Sintering temperature | Relative density | Average crystal grain diameter | Monoclinic fraction before hydrothermal treatment | Monoclinic fraction after hydrothermal treatment at 134°C and 0.3 MPa for 15 hours | Change in monoclinic fraction before and after hydrothermal treatment at 134°C and 0.3 MPa for 15 hours | Bending strength | Fracture toughness value |
| | % | t/cm$^2$ | hr | °C | % | nm | % | % | % | MPa | Mpa·m$^{0.5}$ |
| Example 9 | 46.5 | 2 | 2 | 1200 | 98.2 | 60 | 0.8 | 0.8 | 0.0 | 800 | 14 |
| | 46.5 | 2 | 2 | 1250 | 99.1 | 68 | 1.2 | 1.4 | 0.2 | 850 | 24 |
| | 46.5 | 2 | 2 | 1300 | 99.4 | 76 | 1.8 | 2.2 | 0.4 | 800 | 29 |
| | 46.5 | 2 | 2 | 1325 | 99.1 | 130 | 2.8 | 3.4 | 0.6 | 800 | 22 |

[Table 4]

| Example No. | Molded body | | Sintered body | | | | | | | | |
|---|---|---|---|---|---|---|---|---|---|---|---|
| | Relative molding density | Molding pressure | Sintering time | Sintering temperature | Relative density | Average crystal grain diameter | Monoclinic fraction before hydrothermal treatment | Monoclinic fraction after hydrothermal treatment at 134°C and 0.3 MPa for 15 hours | Change in monoclinic fraction before and after hydrothermal treatment at 134°C and 0.3 MPa for 15 hours | Bending strength | Fracture toughness value |
| | % | t/cm$^2$ | hr | °C | % | nm | % | % | % | MPa | Mpa·m$^{0.5}$ |
| Example 10 | 46.1 | 2 | 2 | 1200 | 98.2 | 65 | 0.2 | 0.3 | 0.1 | 1000 | 10 |
| | 46.1 | 2 | 2 | 1250 | 99.1 | 78 | 0.9 | 0.5 | 0.1 | 1000 | 13 |
| | 46.1 | 2 | 2 | 1300 | 99.1 | 105 | 2.8 | 4.4 | 1.6 | 1000 | 28 |
| | 46.1 | 2 | 2 | 1350 | 99.0 | 138 | 5.0 | 9.0 | 4.0 | 1000 | 17 |
| Example 11 | 45.9 | 2 | 2 | 1200 | 98.8 | 57 | 0. 4 | 0.7 | 0.3 | 1000 | 11 |
| | 45.9 | 2 | 2 | 1250 | 99.6 | 67 | 0.6 | 1.1 | 0.5 | 1000 | 17 |
| | 45.9 | 2 | 2 | 1300 | 99.7 | 110 | 1.8 | 4.5 | 2.7 | 1000 | 21 |
| | 45.9 | 2 | 2 | 1350 | 99.8 | 142 | 3.5 | 8.8 | 5.3 | 900 | 18 |
| Example 12 | 45.8 | 2 | 2 | 1200 | 98.8 | 55 | 0.7 | 1.0 | 0.3 | 950 | 12 |
| | 45.8 | 2 | 2 | 1250 | 99.5 | 72 | 0.9 | 1.5 | 0.6 | 950 | 18 |
| | 45.8 | 2 | 2 | 1300 | 99.7 | 99 | 1.5 | 3.4 | 1.9 | 950 | 21 |
| | 45.8 | 2 | 2 | 1350 | 99.8 | 133 | 2.7 | 12.7 | 10.0 | 850 | 18 |
| Example 13 | 46.3 | 2 | 2 | 1200 | 98.9 | 56 | 1.2 | 2.0 | 0.8 | 900 | 10 |
| | 46.3 | 2 | 2 | 1250 | 99.5 | 80 | 1.9 | 3.5 | 1.6 | 950 | 15 |
| | 46.3 | 2 | 2 | 1300 | 99.7 | 105 | 2.7 | 6.8 | 4.1 | 900 | 22 |
| | 46.3 | 2 | 2 | 1350 | 99.8 | 129 | 4.9 | 14.5 | 9.6 | 850 | 17 |

| Example No. | Molded body | | Sintered body | | | | | | | | |
|---|---|---|---|---|---|---|---|---|---|---|---|
| | Relative molding density | Molding pressure | Sintering time | Sintering temperature | Relative density | Average crystal grain diameter | Monoclinic fraction before hydrothermal treatment | Monoclinic fraction after hydrothermal treatment at 134°C and 0.3 MPa for 15 hours | Change in monoclinic fraction before and after hydrothermal treatment at 134°C and 0.3 MPa for 15 hours | Bending strength | Fracture toughness value |
| | % | t/cm$^2$ | hr | °C | % | nm | % | % | % | MPa | Mpa·m$^{0.5}$ |
| Example 14 | 46.3 | 2 | 2 | 1200 | 98.5 | 58 | 0.4 | 0.5 | 0.1 | 900 | 12 |
| | 46.3 | 2 | 2 | 1250 | 98.8 | 70 | 1.1 | 1.6 | 0.5 | 990 | 16 |
| | 46.3 | 2 | 2 | 1300 | 99.4 | 101 | 1.4 | 2.0 | 0.6 | 1000 | 20 |
| | 46.3 | 2 | 2 | 1350 | 99.5 | 124 | 2.2 | 3.2 | 1.0 | 1000 | 22 |
| Example 15 | 99.2 | 2 | 2 | 1200 | 98.5 | 63 | 0.5 | 1.1 | 0.6 | 850 | 13 |
| | 49.2 | 2 | 2 | 1250 | 99.0 | 76 | 0.9 | 1.3 | 0.4 | 950 | 25 |
| | 49.2 | 2 | 2 | 1300 | 99.3 | 102 | 1.6 | 5.5 | 3.9 | 1100 | 27 |
| | 49.2 | 2 | 2 | 1350 | 99.7 | 136 | 2.2 | 8.9 | 6.7 | 1100 | 19 |
| Example 16 | 45.6 | 2 | 2 | 1200 | 98.3 | 62 | 1.2 | 1.7 | 0.5 | 890 | 14 |
| | 45.6 | 2 | 2 | 1250 | 99.6 | 80 | 1.8 | 2.3 | 0.5 | 950 | 19 |
| | 45.6 | 2 | 2 | 1300 | 99.8 | 99 | 3.9 | 4.4 | 0.5 | 1000 | 22 |
| | 45.6 | 2 | 2 | 1350 | 99.9 | 128 | 4.9 | 6 | 1.1 | 1000 | 19 |
| Example 17 | 45.7 | 2 | 2 | 1200 | 98.9 | 58 | 0.2 | 0.5 | 0.3 | 820 | 12 |
| | 45.7 | 2 | 2 | 1250 | 99.1 | 69 | 0.3 | 1.5 | 1.2 | 990 | 14 |
| | 45.7 | 2 | 2 | 1300 | 99.4 | 98 | 0.9 | 2.8 | 1.9 | 1100 | 16 |
| | 45.7 | 2 | 2 | 1350 | 99.5 | 114 | 1.2 | 3.3 | 2.1 | 1000 | 15 |

| Example No. | Molded body | | Sintered body | | | | | | | | |
|---|---|---|---|---|---|---|---|---|---|---|---|
| | Relative molding density | Molding pressure | Sintering time | Sintering temperature | Relative density | Average crystal grain diameter | Monoclinic fraction before hydrothermal treatment | Monoclinic fraction after hydrothermal treatment at 134°C and 0.3 MPa for 15 hours | Change in monoclinic fraction before and after hydrothermal treatment at 134°C and 0.3 MPa for 15 hours | Bending strength | Fracture toughness value |
| | % | t/cm$^2$ | hr | °C | % | nm | % | % | % | MPa | Mpa·m$^{0.5}$ |
| Example 18 | 46.2 | 2 | 2 | 1200 | 98.9 | 54 | 0.4 | 0.5 | 0.1 | 830 | 11 |
| | 46.2 | 2 | 2 | 1250 | 99.1 | 71 | 0.7 | 1.1 | 0.4 | 1000 | 16 |
| | 46.2 | 2 | 2 | 1300 | 99.3 | 109 | 1.1 | 1.7 | 0.6 | 1000 | 13 |
| | 46.2 | 2 | 2 | 1350 | 99.4 | 119 | 1.7 | 2.3 | 0.6 | 980 | 13 |
| Comparative Example 1 | 47.1 | 2 | 2 | 1200 | 97.9 | 61 | 1.4 | 1.5 | 0.1 | 800 | 9 |
| | 47.1 | 2 | 2 | 1225 | 98.3 | 68 | 2.0 | 2.2 | 0.2 | 1000 | 18 |
| | 47.1 | 2 | 2 | 1275 | 99.6 | 92 | 5.0 | 5.2 | 0.2 | 1000 | 20 |
| | 47.1 | 2 | 2 | 1300 | 96.6 | 118 | 71.3 | Unmeasurable | Unmeasurable | Unmeasurable | Unmeasurable |
| Comparative Example 2 | 47.9 | 2 | 2 | 1250 | 99.7 | 115 | 0.9 | 12 | 11.6 | 1100 | 13 |
| | 47.9 | 2 | 2 | 1300 | 99.8 | 147 | 0.5 | 18 | 17.5 | 1100 | 14 |
| | 47.9 | 2 | 2 | 1400 | 99.6 | 195 | 0.7 | 84 | 83.3 | 900 | 15 |

EP 4 428 112 A1

38

[Table 5]

| Example No. | Sintered body | | | | | |
|---|---|---|---|---|---|---|
| | Sintering time | Sintering temperature | Monoclinic fraction before hydrothermal treatment | Monoclinic fraction after hydrothermal treatment at 300 °C and 8 MPa for 5 hours | Monoclinic fraction after hydrothermal treatment at 400 °C and 30 MPa for 5 hours | Change in monoclinic fraction before and after hydrothermal treatment at 400 °C and 30 MPa for 5 hours |
| | hr | °C | % | % | % | % |
| Example 2 | 2 | 1200 | 0.5 | 1.0 | 1.6 | 1.1 |
| | 2 | 1250 | 0.6 | 1.5 | 4.7 | 4.1 |
| Example 3 | 2 | 1200 | 0.4 | 1.6 | 1.9 | 1.5 |
| | 2 | 1250 | 0.5 | 4.2 | 4.8 | 4.3 |
| Example 4 | 2 | 1200 | 0.4 | 2.3 | 3.3 | 2.9 |
| | 2 | 1250 | 0.5 | 7.2 | 8.3 | 7.8 |
| Example 9 | 2 | 1200 | 0.8 | 0.9 | 2.2 | 1.4 |
| | 2 | 1250 | 1.2 | 1.6 | 3.7 | 2.5 |
| Example 10 | 2 | 1200 | 0.2 | 0.6 | 0.8 | 0.6 |
| | 2 | 1250 | 0.4 | 0.9 | 1.1 | 0.7 |
| Example 11 | 2 | 1200 | 0.4 | 0.9 | 1.2 | 0.8 |
| | 2 | 1250 | 0.6 | 1.3 | 2.1 | 1.5 |
| Example 12 | 2 | 1200 | 0.7 | 1.3 | 1.7 | 1.0 |
| | 2 | 1250 | 0.9 | 1.9 | 2.4 | 1.5 |
| Example 13 | 2 | 1200 | 1.2 | 4.4 | 6.7 | 5.5 |
| | 2 | 1250 | 1.9 | 5.7 | 9.2 | 7.3 |
| Example 17 | 2 | 1200 | 0.2 | 1.1 | 1.4 | 1.2 |
| | 2 | 1250 | 0.3 | 1.7 | 2.3 | 2.0 |
| Example 18 | 2 | 1200 | 0.4 | 1.2 | 1.9 | 1.5 |
| | 2 | 1250 | 0.7 | 2.3 | 2.8 | 2.1 |
| Comparative Example 2 | 2 | 1250 | 0.4 | 37.6 | 79.5 | 79.1 |
| | 2 | 1300 | 0.5 | 57.4 | 87.4 | 86.9 |

**Claims**

1. A zirconia powder comprising

   stabilized zirconia containing zirconia and a stabilizer, wherein
   the stabilizer contains a first stabilizer and a second stabilizer,
   the first stabilizer is CaO,
   the second stabilizer is at least one selected from the group consisting of $Y_2O_3$, $Yb_2O_3$, $Er_2O_3$, $CeO_2$, $Nd_2O_3$, $La_2O_3$, and $Tb_2O_3$,
   a total amount of the stabilizer in the stabilized zirconia is 2.5 mol% or more and 6.5 mol% or less in terms of oxide, and
a ratio of [amount (mol%) of CaO]/[total amount (mol%) of stabilizer] is 50% or more and 98% or less.

2. The zirconia powder according to claim 1, wherein

the second stabilizer is at least one selected from the group consisting of $Y_2O_3$, $Yb_2O_3$, $Er_2O_3$, $Nd_2O_3$, $La_2O_3$, and $Tb_2O_3$, and
a total amount of the stabilizer in the stabilized zirconia is 2.5 mol% or more and 4.5 mol% or less in terms of oxide.

3. The zirconia powder according to claim 1, wherein

the second stabilizer is $CeO_2$, and
a total amount of the stabilizer in the stabilized zirconia is 4.0 mol% or more and 6.5 mol% or less in terms of oxide.

4. The zirconia powder according to any one of claims 1 to 3, wherein $Al_2O_3$ is contained in an amount of 3 mass% or less relative to an entire amount of the zirconia powder.

5. The zirconia powder according to any one of claims 1 to 4, wherein

when a minimum sintering temperature at which the following <Characteristic 1>, <Characteristic 2>, <Characteristic 3>, and <Characteristic 4> are satisfied when molding is performed at a molding pressure of 2 t/cm$^2$ and sintering is performed at atmospheric pressure is defined as a temperature A, and
a maximum sintering temperature at which the following <Characteristic 1>, <Characteristic 2>, <Characteristic 3>, and <Characteristic 4> are satisfied when molding is performed at a molding pressure of 2 t/cm$^2$ and sintering is performed at atmospheric pressure is defined as a temperature B,
a difference between an average crystal grain diameter A when sintering is performed at the temperature A and an average crystal grain diameter B when sintering is performed at the temperature B [(average crystal grain diameter B) - (average crystal grain diameter A)] is 50 nm or more:

    <Characteristic 1>
    a relative sintered density is 98.0% or more;
    <Characteristic 2>
    a toughness value as measured by IF method is 10 MPa $\cdot$m$^{0.5}$ or more;
    <Characteristic 3>
    a three-point bending strength is 700 MPa or more;
    <Characteristic 4>
    a monoclinic fraction after hydrothermal treatment at 134°C and 0.3 MPa for 15 hours is 30% or less.

6. The zirconia powder according to any one of claims 1 to 5, which has a specific surface area of 10 m$^2$/g or more and 40 m$^2$/g or less.

7. The zirconia powder according to any one of claims 1 to 6, which has a particle diameter $D_{50}$ of 0.10 um or more and 0.80 um or less.

8. A zirconia sintered body comprising

stabilized zirconia containing zirconia and a stabilizer, wherein
the stabilizer contains a first stabilizer and a second stabilizer,
the first stabilizer is CaO,
the second stabilizer is at least one selected from the group consisting of $Y_2O_3$, $Yb_2O_3$, $Er_2O_3$, $CeO_2$, $Nd_2O_3$, $La_2O_3$, and $Tb_2O_3$,
a total amount of the stabilizer in the stabilized zirconia is 2.5 mol% or more and 6.5 mol% or less in terms of oxide, and
a ratio of [amount (mol%) of CaO]/[total amount (mol%) of stabilizer] is 50% or more and 98% or less.

9. The zirconia sintered body according to claim 8, wherein

the second stabilizer is at least one selected from the group consisting of $Y_2O_3$, $Yb_2O_3$, $Er_2O_3$, $Nd_2O_3$, $La_2O_3$,

and $Tb_2O_3$, and
a total amount of the stabilizer in the stabilized zirconia is 2.5 mol% or more and 4.5 mol% or less in terms of oxide.

10. The zirconia sintered body according to claim 8, wherein

the second stabilizer is $CeO_2$, and
a total amount of the stabilizer in the stabilized zirconia is 4.0 mol% or more and 6.5 mol% or less in terms of oxide.

11. The zirconia sintered body according to any one of claims 8 to 10, wherein $Al_2O_3$ is contained in an amount of 3 mass% or less relative to an entire amount of the zirconia sintered body.

12. The zirconia sintered body according to any one of claims 8 to 11, wherein a monoclinic fraction after hydrothermal treatment at 134°C and 0.3 MPa for 15 hours is 30% or less.

13. The zirconia sintered body according to any one of claims 8 to 12, wherein

a monoclinic fraction before hydrothermal treatment is 7.0% or less, and
a value obtained by subtracting a monoclinic fraction before hydrothermal degradation from a monoclinic fraction after hydrothermal treatment at 134°C and 0.3 MPa for 15 hours is 20% or less.

14. The zirconia sintered body according to any one of claims 8 to 13, which has a three-point bending strength of 700 MPa or more and 1500 MPa or less.

15. The zirconia sintered body according to any one of claims 8 to 14, which has a toughness value of 10 MPa $\cdot m^{0.5}$ or more and 40 MPa$\cdot m^{0.5}$ or less as measured by IF method.

16. The zirconia sintered body according to any one of claims 8 to 15, wherein a monoclinic fraction after hydrothermal treatment at 400°C and 30 MPa for 5 hours is 30% or less.

17. The zirconia sintered body according to any one of claims 8 to 16, wherein

a monoclinic fraction before hydrothermal treatment is 7.0% or less, and
a value obtained by subtracting a monoclinic fraction before hydrothermal degradation from a monoclinic fraction after hydrothermal treatment at 400°C and 30 MPa for 5 hours is 20% or less.

18. A method for producing a zirconia sintered body, the method comprising:

step X in which the zirconia powder according to any one of claims 1 to 7 is molded to obtain a molded body; and
step Y in which, after step X, the molded body is sintered under conditions of 1200°C or higher and 1450°C or lower and 1 hour or more and 5 hours or less.

Fig.1

ZIRCONIUM SALT SOLUTION

SULFATING AGENT SOLUTION

10 12 L3 20 32 30

L1 L2

40
42

# Fig.2

INDENTATION LENGTH ALONG X AXIS

CRACK LENGTH ALONG Y AXIS

INDENTATION LENGTH ALONG Y AXIS

CRACK LENGTH ALONG X AXIS

## INTERNATIONAL SEARCH REPORT

| International application No. |
| --- |
| **PCT/JP2023/011743** |

**A. CLASSIFICATION OF SUBJECT MATTER**

*C04B 35/486*(2006.01)i; *C01G 25/02*(2006.01)i
FI:  C04B35/486; C01G25/02

According to International Patent Classification (IPC) or to both national classification and IPC

**B. FIELDS SEARCHED**

Minimum documentation searched (classification system followed by classification symbols)

C04B35/486; C01G25/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580/JSTChina (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | JP 62-078113 A (KAWASAKI STEEL CORP) 10 April 1987 (1987-04-10)<br>p. 76, lower left column, line 12 to lower right column, line 9, p. 78, upper right column, lines 9-19, p. 78, lower left column, line 15 to lower right column, line 11, table 1, example 12 | 1, 2, 6-9, 18 |
| Y | p. 76, lower left column, line 12 to lower right column, line 9, p. 78, upper right column, lines 9-19, p. 78, lower left column, line 15 to lower right column, line 11, table 1, example 12 | 4, 11 |
| A | entire text, all drawings | 3, 5, 10, 12-17 |
| Y | WO 2021/153211 A1 (DAIICHI KIGENSO KAGAKU KOGYO CO., LTD.) 05 August 2021 (2021-08-05)<br>paragraph [0090] | 4, 11 |
| A | entire text, all drawings | 1-3, 5-10, 12-18 |
| Y | JP 2015-137187 A (NIKKATO CORP) 30 July 2015 (2015-07-30)<br>paragraph [0020] | 4, 11 |
| A | entire text, all drawings | 1-3, 5-10, 12-18 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 June 2023** | **20 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/011743**

C. DOCUMENTS CONSIDERED TO BE RELEVANT

| Category* | Citation of document, with indication, where appropriate, of the relevant passages | Relevant to claim No. |
|---|---|---|
| Y | JP 2-157157 A (TOSOH CORP) 15 June 1990 (1990-06-15)<br>p. 328, lower left column, lines 5-15 | 4, 11 |
| A | p. 329, upper left column, line 8 to upper right column, line 4, p. 329, upper right column, line 7 to lower left column, line 9, tables 1, 3, sample no. 8 | 1-3, 5-10, 12-18 |
| A | JP 3-159960 A (SUMITOMO OOSAKA SEMENTO KK) 09 July 1991 (1991-07-09)<br>p. 349, lower left column, line 7 to p. 350, upper left column, line 12, example 1 | 1-18 |
| A | JP 5-254933 A (TOSOH CORP) 05 October 1993 (1993-10-05)<br>paragraphs [0035]-[0039], [0049], [0050], table 1, example 7 | 1-18 |
| A | US 4619817 A (BATTELLE MEMORIAL INSTITUTE) 28 October 1986 (1986-10-28)<br>entire text, all drawings | 1-18 |
| A | JP 10-194831 A (TOSHIBA CERAMICS CO LTD) 28 July 1998 (1998-07-28)<br>entire text, all drawings | 1-18 |

Form PCT/ISA/210 (second sheet) (January 2015)

**INTERNATIONAL SEARCH REPORT**
**Information on patent family members**

International application No.

**PCT/JP2023/011743**

| Patent document cited in search report | | | Publication date (day/month/year) | Patent family member(s) | Publication date (day/month/year) |
|---|---|---|---|---|---|
| JP | 62-078113 | A | 10 April 1987 | (Family: none) | |
| WO | 2021/153211 | A1 | 05 August 2021 | EP 4023601 A1 paragraph [0087] CN 114599765 A | |
| JP | 2015-137187 | A | 30 July 2015 | (Family: none) | |
| JP | 2-157157 | A | 15 June 1990 | (Family: none) | |
| JP | 3-159960 | A | 09 July 1991 | (Family: none) | |
| JP | 5-254933 | A | 05 October 1993 | (Family: none) | |
| US | 4619817 | A | 28 October 1986 | (Family: none) | |
| JP | 10-194831 | A | 28 July 1998 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5070224 A

- JP 2020170949 A

**Non-patent literature cited in the description**

- **W. PYDA et al.** *Ceramics International,* 1987, vol. 13, 114-118